(19) Europäisches Patentamt
European Patent Office
Office européen des brevets

(11) **EP 2 067 298 B1**

(12) **FASCICULE DE BREVET EUROPEEN**

(45) Date de publication et mention
de la délivrance du brevet:
**20.01.2010 Bulletin 2010/03**

(21) Numéro de dépôt: **07858381.2**

(22) Date de dépôt: **24.09.2007**

(51) Int Cl.:
***H04L 9/08*** *(2006.01)*

(86) Numéro de dépôt international:
**PCT/FR2007/001554**

(87) Numéro de publication internationale:
**WO 2008/037886 (03.04.2008 Gazette 2008/14)**

(54) **SYSTÈME ET PROCÉDÉ POUR LA TRANSMISSION SÉCURISÉE DE CODE BINAIRE PAR CODAGE EN PHASE ET EN INTENSITÉ**

SYSTEM UND VERFAHREN ZUR SICHEREN ÜBERTRAGUNG EINES BINÄREN CODES DURCH PHASEN- UND INTENSITÄTSKODIERUNG

SYSTEM AND METHOD FOR THE SECURE TRANSMISSION OF BINARY CODE BY PHASE- AND INTENSITY-CODING

(84) Etats contractants désignés:
**AT BE BG CH CY CZ DE DK EE ES FI FR GB GR
HU IE IS IT LI LT LU LV MC MT NL PL PT RO SE
SI SK TR**

(30) Priorité: **25.09.2006 FR 0608400**

(43) Date de publication de la demande:
**10.06.2009 Bulletin 2009/24**

(73) Titulaires:
• **Centre National de La Recherche Scientifique-CNRS**
**75794 Paris Cedex 16 (FR)**
• **Université De Franche-Comté Besancon**
**25030 Besançon Cedex (FR)**

(72) Inventeurs:
• **MEROLLA, Jean-Marc**
**25620 Trepot (FR)**
• **BLOCH, Matthieu**
**01280 Prevessin-Moens (FR)**

(74) Mandataire: **Novagraaf IP**
**122 Rue Édouard Vaillant**
**92593 Levallois-Perret Cedex (FR)**

(56) Documents cités:
**WO-A1-02/49267**

**Description**

La présente invention se rapporte à un système pour la transmission optique sécurisée de code binaire.

Elle se rapporte également à un procédé pour la transmission optique sécurisée d'un code binaire.

En théorie, la confidentialité absolue d'une ligne de transmission peut être assurée si un signal porteur d'information correspondant à un message est crypté par addition, à l'aide d'un opérateur « ou » exclusif, d'une clé de cryptage aléatoire. Le message ainsi codé et envoyé est impossible à déchiffrer si cette clé, de même longueur que le message à déchiffrer, n'est utilisée qu'une fois. Toutefois, un algorithme de cryptage n'a de sens que si la clé partagée par les correspondants légitimes est totalement secrète.

Les lois de la mécanique quantique offrent la possibilité de résoudre ce problème en assurant une sécurité inconditionnelle à la transmission d'une clé de cryptage.

De nombreux protocoles de partage de clés ont été imaginés en codant chaque bit de la clé sur un état quantique d'un photon.

Le premier en date fut présenté par Bennett et al. dans l'article C.H. Bennett, G. Brassard « Quantum Cryptography : Public key distribution and coin tossing », Proceeding of IEEE International on Computers, Systems and Signal Processing, Bangalore, Inde, (IEEE New-York, 1984) pp. 175-179, dans lequel il est proposé un protocole d'échange à 4 états formant deux bases conjuguées, communément appelé protocole à 4 états ou protocole BB84

Un deuxième protocole, présenté également par Bennett, communément appelée protocole à 2 états ou protocole B92, consiste à coder les bits de la clé sur deux états non orthogonaux. Ce protocole est décrit dans le publication C.H Bennett, « Quantum cryptography using any two non orthogonal states », Physical Review Letters, Vol 68, no 21, pp. 3121-3124, 1992.

Dans ces deux protocoles, l'émetteur, couramment dénommé Alice, prépare le photon dans un état choisi aléatoirement parmi les états à disposition. Le récepteur, couramment dénommé Bob, analyse chaque état des photons incidents par une mesure. Si un espion, couramment appelé Eve, tente d'écouter la ligne de transmission secrète, il devra réaliser à son tour une mesure pour connaître l'état des photons envoyés par Alice. L'utilisation de photon associé au protocole d'échange de clé, limite la quantité d'information que peut extraire l'espion du canal de transmission. La mesure de différents paramètres, taux d'erreur, débit de transmission, permet aux correspondants légitimes d'estimer si cette quantité d'information est inférieure à celle qu'ils partagent. Lorsque la quantité d'information partagée par les correspondants légitimes est supérieure à l'information connue de l'espion, une clé confidentielle peut être partagée. D'autres schémas d'échange basés sur la transmission par photon EPR (Einstein, Podolsky, Rosen) ou employant d'autres codages ont été développés.

Différentes techniques ont été proposées pour préparer le photon dans les états requis.

Une première technique consiste à utiliser l'état de polarisation du photon et a été décrite par exemple dans la publication J. Breguet, A. Muller, N. Gisin « Quantum Cryptography with polarized photons in optical fibres », Journal of Modern Optics, Vol. 41, no. 12, pp. 2405-2412, 1994. A l'émission, le bit 1 peut être représenté par une polarisation verticale ou circulaire droite alors qu'un bit 0 peut être représenté par une polarisation horizontale ou circulaire gauche. A la réception, Bob choisit aléatoirement et indépendamment d'Alice, la base dans laquelle il analyse l'état du photon incident.

Une deuxième technique de codage propose l'utilisation de la phase relative introduite entre des impulsions à photon unique pour coder l'information. Alice et Bob utilisent chacun un interféromètre à fibre déséquilibré pour respectivement introduire et mesurer ce déphasage relatif. Chaque bit est représenté aléatoirement par une valeur de déphasage optique. Ce système exploite ainsi les propriétés de l'interférence à un photon dans le domaine temporel. Chaque interféromètre possède sur l'un de ses bras un déphaseur optique permettant la transmission de la clé. Ainsi à la sortie de l'interféromètre d'Alice, on observe deux impulsions séparées d'un retard temporel. A la sortie de l'interféromètre de Bob, on observe trois impulsions. La première et la troisième proviennent respectivement des impulsions ayant suivi trajets les plus courts et les plus longs au sein des deux interférommètres. La deuxième correspond à la superposition des impulsions déphasé par Alice et retardées par Bob et des impulsions retardées par Alice et déphasées par Bob. L'intensité de la deuxième impulsion dépend donc à la fois du déphasage introduit par Bob et Alice. C'est elle qui est utilisée pour obtenir une clé de cryptage. Différentes variantes des cette technique sont décrites notamment par le brevet américain US 5 307 410 et l'article de C. Marand and P. D. Townsend, "Quantum key distribution over distances as long as 30 km," Opt. Lett., vol. 20, no. 16, pp. 1695-1697, 1995 dans I

Dans une troisième technique, qui a fait l'objet de la demande de brevet français FR 2763193, Alice code chaque bit de la clé par une différence de phase introduite entre différentes composantes spectrales obtenues par modulation optique. La différence de phase est choisie aléatoirement entre 2 valeurs. Bob module la lumière afin de générer des composantes fréquentielles à partir des composantes générées par Alice. Bob introduit un second déphasage, choisi indépendamment d'Alice, entre les différentes composantes fréquentielles qu'il a pu générées. En exploitant les propriétés d'interférence à un photon dans les bandes latérales de modulation, Bob est capable de retrouver l'état quantique des photons incidents. Ce procédé de transmission permet notamment d'utiliser des composants électro-optiques standards. Il est compact, ce qui minimise les effets des instabilités externes. Ainsi, il peut être installé sur un réseau standard. Cette méthode qui utilise la phase relative uniquement pour coder l'information ne permet pas la mise en oeuvre d'un protocole à quatre états

On connaît également dans l'art antérieur un système de transmission optique d'un code binaire comportant un émetteur et un récepteur et une ligne de réception s'étendant entre ledit émetteur et ledit récepteur, ledit émetteur comprenant :

- des moyens de génération agencés pour générer un signal électromagnétique ;
- des moyens de modification d'émission agencés pour modifier au moins une grandeur physique caractérisant ledit signal électromagnétique en fonction dudit code binaire de sorte à générer un signal modifié d'émission ;

ladite ligne de transmission étant agencée pour transmettre ledit signal modifié d'émission vers ledit récepteur ; ledit récepteur comprenant

- des moyens de modification de réception agencés pour modifier ledit signal modifié d'émission de sorte à générer un signal modifié de réception ;
- des moyens de détection agencés pour détecter au moins une des grandeurs physiques caractérisant ledit signal modifié de réception.

Un tel système est par exemple décrit dans la demande PCT WO 02/49267. Cette demande enseigne que les moyens de modification de l'émetteur comprennent des moyens de déphasage qui imposent un déphasage qui est choisi aléatoirement égal à 0 ou $\pi/2$ pour une première valeur de bit et à $\pi$ ou $3\pi/2$ pour une deuxième valeur de bit. Les valeurs possibles de déphasage $\{0, \pi\}$ et $\{\pi/2, 3\pi/2\}$ correspondent respectivement à deux bases B1 et B2 d'état quantique utilisés pour exprimer les bits 0 et 1. A l'émission, Alice choisit aléatoirement une base parmi les deux bases. Si Alice choisit la base B1, elle exprimera le bit 0 par une phase de 0, et le bit 1 par une phase de $\pi$. Si elle choisit la base B2, elle exprimera le bit 0 par une phase de $\pi/2$ et le bit 1 par une phase de $3\pi/2$. A la réception, Bob choisit aléatoirement et indépendamment d'Alice une des deux bases B1 et B2 pour effectuer la mesure du bit reçu. Si les deux bases choisies à l'émission et à la réception sont les mêmes, la détection d'un bit est possible. Si les deux bases choisies sont différentes, Bob ne pourra pas déterminer le bit transmis. Les bases utilisées permettent la mise en oeuvre d'un protocole à quatre états tel que précédemment décrit.

Dans ce document, les différents états utilisés se différencient donc uniquement par la phase.

Les techniques précédentes présentent cependant plusieurs inconvénients.

Pour la première technique, il faut rigoureusement conserver la polarisation pendant toute la transmission. Pour résoudre ce problème il faut des fibres à maintien de polarisation, mais de telles fibres ne sont pas installées sur les réseaux existants. La deuxième solution envisageable est de contrôler la polarisation le long de la transmission. Cette solution complique énormément le système car il faut régulièrement contrôler la fluctuation de polarisation, ce qui a pour conséquence de diminuer le débit de la clé.

Pour la deuxième technique, les systèmes de distribution reposant sur cette méthode utilisent un couple d'interféromètres émetteur/récepteur avec des différences de marche importantes. La difficulté est de maintenir constant le retard entre les deux bras avec une grande précision en dépit des instabilités thermiques et mécaniques.

Pour la troisième technique, seul le protocole B92 à 2 états peut être exploité avec la configuration proposée, contrairement aux deux premières techniques qui utilisent le protocole à 4 états BB84. L'utilisation d'un faible taux de modulation ne permet pas la mise en oeuvre efficace de source à photon unique. Le taux de modulation étant de l'ordre de 10%, pour chaque photon généré, la probablitité de transmission sera de 0.1. Ainsi la méthode est bien adaptée à la source laser impulsionnelle atténuée.

La quatrième technique permet l'exploitation de nombreux protocoles et notamment le protocole BB84 à quatre états, mais ne permet pas l'utilisation efficace de source à photon unique.

L'invention vise à pallier les inconvénients de l'art antérieur.

Un but de l'invention est de fournir une alternative aux systèmes de transmission optique de code binaire existants.

Un autre but de l'invention est de fournir un système agencé pour exprimer des bits d'un code binaire dans des bases permettant une transmission sécurisée entre un émetteur et un récepteur et une détection des bits par le récepteur.

Un autre but de l'invention est de pouvoir utiliser efficacement des sources à photons uniques avec des composants électro-optiques intégrés standards.

Au moins un de ces buts est atteint par l'invention qui a pour objet un système de transmission optique d'un code binaire comportant un émetteur et un récepteur et une ligne de réception s'étendant entre ledit émetteur et ledit récepteur ledit émetteur comprenant :

- des moyens de génération agencés pour générer un signal électromagnétique ;
- des moyens de modification d'émission agencés pour modifier au moins une grandeur physique caractérisant ledit signal électromagnétique en fonction dudit code binaire de sorte à générer un signal modifié d'émission ;
  ladite ligne de transmission étant agencée pour transmettre ledit signal modifié d'émission vers ledit récepteur ;
  ledit récepteur comprenant
- des moyens de modification de réception agencés pour modifier ledit signal modifié d'émission de sorte à générer un signal modifié de réception ;
- des moyens de détection agencés pour détecter au moins une des grandeurs physiques caractérisant ledit signal modifié de réception

dans lequel lesdits moyens de modification d'émission sont agencés pour modifier la valeur d'au moins une première grandeur physique et d'une deuxième grandeur physique caractérisant ledit signal électromagnétique de sorte à générer ledit signal modifié d'émission, ledit signal modifié d'émission étant choisi aléatoirement parmi au moins un premier type de signal modifié d'émission et un deuxième type de signal modifié d'émission,

dans lequel, pour ledit premier type de signal modifié d'émission, ladite première grandeur physique est constante, et ladite deuxième grandeur physique est fonction d'une valeur de bit dudit code binaire, et pour ledit deuxième type de signal modifié d'émission, ladite deuxième grandeur physique est constante, et ladite première grandeur physique est fonction d'une valeur de bit dudit code binaire,

et dans lequel lesdits moyens de détection sont agencés pour déterminer une valeur de ladite première grandeur physique et une valeur de ladite deuxième grandeur physique.

Le premier type de signal et le deuxième type de signal correspondent donc à deux bases B1 et B2 dans lesquelles les bits transmis par Alice peuvent être exprimés. A l'émission, Alice choisit aléatoirement une base parmi les deux bases, c'est-à-dire un type de signal parmi les deux types de signaux. Si Alice choisit la base B1, elle exprimera par exemple le bit 0 par une première valeur de la première grandeur physique, et le bit 1 par une deuxième valeur la première grandeur physique, l'autre grandeur physique étant constante. De même, Si Alice choisit la base B2, elle exprimera par exemple le bit 0 par une première valeur de la deuxième grandeur physique, et le bit 1 par une deuxième valeur la deuxième grandeur physique, l'autre grandeur physique étant constante. De la sorte, Bob pourra déterminer les bits transmis par analyse du signal reçu.

L'utilisation de deux grandeurs physiques différentes permet la réalisation d'un système de transmission efficace utilisant des composants de l'optique intégrée ainsi que des sources à photon unique.

Ladite première grandeur physique peut être l'intensité des composantes spectrales dudit signal électromagnétique et ladite deuxième grandeur physique peut être la phase relative des composantes spectrales dudit signal électromagnétique.

Selon un mode de réalisation de l'invention, lesdits moyens de modification d'émission peuvent comprendre des moyens de modulation d'émission agencés pour moduler ledit signal électromagnétique en fonction dudit code binaire de sorte à générer ledit signal modifié d'émission, les composantes spectrales dudit premier type de signal modifié d'émission ayant une première intensité et une première phase relative, les composantes spectrales dudit deuxième type de signal modifié d'émission ayant une deuxième intensité et une deuxième phase relative;

ladite première intensité des composantes spectrales d'émission ayant une première valeur de première intensité pour une première valeur de bit dudit code binaire, et une deuxième valeur de première intensité pour une deuxième valeur de bit dudit code binaire, ladite première valeur de première intensité modifiée étant égale à ladite deuxième valeur de première intensité modifiée,

ladite première phase relative des composantes spectrales d'émission ayant une première valeur de première phase relative d'émission pour une première valeur de bit dudit code binaire, et une deuxième valeur de première phase relative d'émission pour une deuxième valeur de bit dudit code binaire, ladite première valeur de première phase relative d'émission étant différente de ladite deuxième valeur de première phase relative d'émission,

ladite deuxième intensité d'émission des composantes spectrales ayant une première valeur de deuxième intensité d'émission pour une première valeur de bit dudit code binaire, et une deuxième valeur de deuxième intensité d'émission pour une deuxième valeur de bit dudit code binaire, ladite première valeur de deuxième intensité d'émission étant différente de ladite deuxième valeur de deuxième intensité d'émission,

ladite deuxième phase relative des composantes spectrales d'émission ayant une première valeur de deuxième phase relative d'émission pour une première valeur de bit dudit code binaire, et une deuxième valeur de deuxième phase relative d'émission pour une deuxième valeur de bit dudit code binaire, ladite première valeur de deuxième phase relative d'émission étant égale à ladite deuxième valeur de deuxième phase relative d'émission,

et, lesdits moyens de modification de réception peuvent comprendre des moyens de modulation de réception agencés pour générer un signal de modulation de réception et pour moduler ledit signal modifié d'émission par ledit signal de modulation de réception, ledit signal de modulation de réception étant généré aléatoirement parmi un premier type de signal de modulation de réception et un deuxième type de signal de modulation de réception, lesdits moyens de détection étant agencés pour détecter sélectivement ladite première valeur de première phase relative des composantes spectrales d'émission ou ladite deuxième valeur de première phase relative des composantes spectrales d'émission lorsque ledit signal modifié de réception correspond à une modulation par ledit premier type de signal de modulation de réception, et à détecter sélectivement ladite première valeur de deuxième intensité des composantes spectrales d'émission ou ladite deuxième valeur de deuxième intensité des composantes spectrales d'émission lorsque ledit signal modifié de réception correspond à une modulation par ledit deuxième type de signal de modulation.

Selon ce mode de réalisation, les moyens de réception sont tels qu'il est possible de détecter les bits émis lorsque la base utilisée à la réception est la même que celle utilisée à l'émission. Pour cela, les moyens de modulation génèrent de façon aléatoire soit un premier signal de modulation de réception, correspondant à une base de mesure en réception égale à la première base soit un deuxième signal de modulation de réception correspondant à une base de mesure en réception égale à la première base. De la sorte, en cas de choix identique de la première base à l'émission et à la réception, la phase relative des composantes spectrales du signal d'émission permet de distinguer l'émission d'un bit 0 ou d'un bit 1. De la même façon, en cas de choix identique de la deuxième base à l'émission et à la réception, l'intensité des composantes spectrales du signal d'émission permet de distinguer l'émission d'un bit 0 ou d'un bit 1.

En cas de choix de base différent à l'émission et à la réception, la valeur du bit émis ne peut être déterminée puisque les deux valeurs sont équiprobables.

Ce mode de réalisation permet donc de réaliser un codage des bits transmis en intensité et en phase en choisissant une première base dans laquelle les composantes spectrales des signaux codant les bits ne se distinguent que par la phase, et une deuxième base dans laquelle les composantes spectrales des signaux codant les bits ne se distinguent que par l'intensité.

Ces deux bases permettent la mise en oeuvre d'un protocole à quatre états.

Toujours dans ce mode de réalisation, lesdits moyens de modulation d'émission peuvent comprendre :

- un premier générateur agencé pour générer un premier signal électrique;
- des moyens de modification de signal d'émission agencés pour modifier ledit premier signal électrique de sorte à générer un signal électrique modifié;
- un modulateur d'émission agencé pour moduler ledit signal électromagnétique par ledit signal électrique modifié de sorte à générer ledit signal modifié d'émission

et lesdits moyens de modulation de réception peuvent comprendre :

- un deuxième générateur agencé pour générer un deuxième signal électrique ;
- un modulateur de réception agencé pour moduler ledit signal modifié d'émission à l'aide dudit deuxième signal électrique.

Toujours dans ce mode de réalisation, lesdits moyens de modification de signal d'émission peuvent comprendre un premier atténuateur agencé pour fixer l'intensité dudit signal électrique modifié à une première valeur d'intensité de signal électrique pour une première valeur de bit dudit code binaire, et à une deuxième valeur d'intensité de signal électrique pour une deuxième valeur de bit dudit code binaire, et un déphaseur agencé pour fixer la phase dudit premier type de signal électrique modifié à une première valeur de phase de signal électrique pour une première valeur de bit dudit code binaire, et à une deuxième valeur de phase de signal électrique pour une deuxième valeur de bit dudit code binaire.

L'invention concerne également un émetteur d'un système de transmission d'un code optique comprenant :

- des moyens de génération agencés pour générer un premier signal électromagnétique;
- des moyens de modification d'émission agencés pour modifier au moins une grandeur physique caractérisant ledit signal électromagnétique en fonction dudit code binaire de sorte à générer un signal modifié d'émission ;

dans lequel lesdits moyens de modification d'émission sont agencés pour modifier la valeur d'au moins une première grandeur physique et d'une deuxième grandeur physique caractérisant ledit signal électromagnétique de sorte à générer ledit signal modifié d'émission, ledit signal modifié d'émission étant choisi aléatoirement parmi au moins un premier type de signal modifié d'émission et un deuxième type de signal modifié d'émission, dans lequel pour ledit premier type de signal modifié d'émission, ladite première grandeur physique est constante, et ladite deuxième grandeur physique est fonction d'une valeur de bit dudit code binaire, et pour ledit deuxième type de signal modifié d'émission, ladite deuxième grandeur physique est constante, et ladite première grandeur physique est fonction d'une valeur de bit dudit code binaire.

Comme précédemment, ladite première grandeur physique peut être l'intensité des composantes spectrales dudit signal électromagnétique ou la phase relative des composantes spectrales dudit signal électromagnétique.

Selon un mode de réalisation de l'émetteur susmentionné, lesdits moyens de modification d'émission peuvent comprendre des moyens de modulation d'émission agencés pour moduler ledit signal électromagnétique en fonction dudit code binaire de sorte à générer ledit signal modifié d'émission, les composantes spectrales dudit premier type de signal modifié d'émission ayant une première intensité et une première phase relative d'émission, les composantes spectrales dudit deuxième type de signal modifié ayant une deuxième intensité et une deuxième phase relative ladite première intensité d'émission des composantes spectrales ayant une première valeur de première intensité d'émission pour une première valeur de bit dudit code binaire, et une deuxième valeur de première intensité d'émission pour une deuxième valeur de bit dudit code binaire, ladite première valeur de première intensité modifiée étant égale à ladite deuxième valeur de première intensité modifiée,

ladite première phase relative des composantes spectrales d'émission ayant une première valeur de première phase relative d'émission pour une première valeur de bit dudit code binaire, et une deuxième valeur de première phase relative d'émission pour une deuxième valeur de bit dudit code binaire, ladite première valeur de première phase relative des composantes spectrales d'émission étant différente de ladite deuxième valeur de première phase relative des composantes spectrales d'émission,

ladite deuxième intensité des composantes spectrales d'émission ayant une première valeur de deuxième intensité d'émission pour une première valeur de bit dudit code binaire, et une deuxième valeur de deuxième intensité d'émission pour une deuxième valeur de bit dudit code binaire, ladite première valeur de deuxième intensité d'émission étant différente de ladite deuxième valeur de deuxième intensité d'émission,

ladite deuxième phase relative des composantes spectrales d'émission ayant une première valeur de deuxième phase relative d'émission pour une première valeur de bit dudit code binaire, et une deuxième valeur de deuxième phase relative d'émission pour une deuxième valeur de bit dudit code binaire, ladite première valeur de deuxième phase relative d'émission étant égale à ladite deuxième valeur de deuxième phase relative d'émission.

Selon ce mode de réalisation, lesdits moyens de modulation d'émission peuvent comprendre :

- un premier générateur agencé pour générer un premier signal électrique;
- des moyens de modification de signal d'émission agencés pour modifier ledit premier signal électrique de sorte à générer un signal électrique modifié;
- un modulateur d'émission agencé pour moduler ledit signal électromagnétique par ledit signal électrique modifié de sorte à générer ledit signal modifié d'émission.

Selon un mode de réalisation, lesdits moyens de modification de signal d'émission peuvent comprendre un premier atténuateur agencé pour fixer l'intensité dudit premier et du deuxième type de signal électrique modifié à une première valeur d'intensité de signal électrique pour une première valeur de bit dudit code binaire, et à une deuxième valeur d'intensité de signal électrique pour une deuxième valeur de bit dudit code binaire, et un déphaseur agencé pour fixer la phase dudit premier type de signal électrique modifié à une première valeur de phase de signal électrique pour une première valeur de bit dudit code binaire, et à une deuxième valeur de phase de signal électrique pour une deuxième valeur de bit dudit code binaire.

L'invention concerne également un récepteur d'un système de transmission optique d'un code binaire, ledit récepteur étant agencé pour recevoir ledit signal modifié d'émission transmis par un émetteur tel que précédemment décrit, ledit récepteur comprenant :

- des moyens de modification de réception agencés pour modifier ledit signal modifié d'émission de sorte à générer un signal modifié de réception ;
- des moyens de détection agencés pour détecter les grandeurs physiques caractérisant ledit signal modifié de réception

dans lequel lesdits moyens de détection sont agencés pour déterminer une valeur de ladite première grandeur physique et une valeur de ladite deuxième grandeur physique.

Selon un mode de réalisation du récepteur, lesdits moyens de modification de réception peuvent comprendre des moyens de modulation de réception agencés pour générer un signal de modulation de réception et pour moduler ledit signal modifié d'émission par ledit signal de modulation de réception, ledit signal de modulation de réception étant généré aléatoirement parmi un premier type de signal de modulation de réception et un deuxième type de signal de modulation de réception, lesdits moyens de détection étant agencés pour détecter sélectivement ladite première valeur de première phase relative des composantes spectrales d'émission ou ladite deuxième valeur de première phase relative des composantes spectrales d'émission lorsque ledit signal modifié de réception correspond à une modulation par ledit premier type de signal de modulation de réception, et à détecter sélectivement ladite première valeur de deuxième intensité des composantes spectrales d'émission ou ladite deuxième valeur de deuxième intensité des composantes spectrales d'émission lorsque ledit signal modifié de réception correspond à une modulation par ledit deuxième type de signal de modulation.

L'invention concerne également un procédé de transmission optique d'un code binaire entre un expéditeur et un destinataire dans lequel
ledit expéditeur

- génère un signal électromagnétique caractérisé par un ensemble de grandeurs physiques;
- modifie au moins une valeur d'au moins une des grandeurs physiques caractérisant ledit signal électromagnétique en fonction dudit code binaire de sorte à générer un signal modifié d'émission ;

ledit destinataire

- reçoit ledit signal modifié d'émission ;
- modifie ledit signal modifié d'émission de sorte à générer un signal modifié de réception ;
- détecte la valeur d'au moins une des grandeurs physiques dudit signal modifié de réception

et dans ce procédé,
ledit expéditeur modifie au moins la valeur d'une première grandeur physique et d'une deuxième grandeur physique caractérisant ledit signal électromagnétique de sorte à générer ledit signal modifié d'émission, ledit signal modifié d'émission étant choisi aléatoirement parmi au moins un premier type de signal modifié d'émission et un deuxième type de signal modifié d'émission,
dans lequel pour ledit premier type de signal modifié d'émission, la valeur de ladite première grandeur physique est constante, et la valeur de ladite deuxième grandeur physique est fonction d'une valeur de bit dudit code binaire, et pour ledit deuxième type de signal modifié d'émission, la valeur de ladite deuxième grandeur physique est constante, et la valeur de ladite première grandeur physique est fonction d'une valeur de bit dudit code binaire,
ledit destinataire détermine une valeur de ladite première grandeur physique et une valeur de ladite deuxième grandeur physique.

Dans ce procédé, ladite première grandeur physique peut être l'intensité des composantes spectrales dudit signal électromagnétique et ladite deuxième grandeur physique peut être la phase relative des composantes spectrales dudit signal électromagnétique.

Selon un mode de réalisation du procédé,
ledit expéditeur peut moduler ledit signal électromagnétique en fonction dudit code binaire de sorte à générer ledit signal modifié d'émission, les composantes spectrales dudit premier type de signal modifié d'émission ayant une première intensité et une première phase relative d'émission, les composantes spectrales dudit deuxième type de signal modifié d'émission ayant une deuxième intensité d'émission et une deuxième phase relative d'émission
ladite première intensité d'émission des composantes spectrales ayant une première valeur de première intensité d'émission pour une première valeur de bit dudit code binaire, et une deuxième valeur de première intensité d'émission pour une deuxième valeur de bit dudit code binaire, ladite première valeur de première intensité modifiée étant égale à ladite deuxième valeur de première intensité modifiée,
ladite première phase relative des composantes spectrales d'émission ayant une première valeur de première phase relative d'émission pour une première valeur de bit dudit code binaire, et une deuxième valeur de première phase relative d'émission pour une deuxième valeur de bit dudit code binaire, ladite première valeur de première phase relative d'émission étant différente de ladite deuxième valeur de première phase relative d'émission,
ladite deuxième intensité des composantes spectrales d'émission ayant une première valeur de deuxième intensité d'émission pour une première valeur de bit dudit code binaire, et une deuxième valeur de deuxième intensité d'émission pour une deuxième valeur de bit dudit code binaire, ladite première valeur de deuxième intensité d'émission étant différente de ladite deuxième valeur de deuxième intensité d'émission,
ladite deuxième phase relative des composantes spectrales d'émission ayant une première valeur de deuxième phase relative d'émission pour une première valeur de bit dudit code binaire, et une deuxième valeur de deuxième phase relative d'émission pour une deuxième valeur de bit dudit code binaire, ladite première valeur de deuxième phase relative d'émission étant égale à ladite deuxième valeur de deuxième phase relative d'émission,
ledit destinataire

- génère un signal de modulation de réception, ledit signal de modulation de réception étant généré aléatoirement parmi un premier type de signal de modulation de réception et un deuxième type de signal de modulation de réception,
- module ledit signal modifié d'émission par ledit signal de modulation de réception,
- détecte sélectivement ladite première valeur de première phase relative des composantes spectrales d'émission ou ladite deuxième valeur de première phase relative des composantes spectrales d'émission lorsque ledit signal modifié de réception correspond à une modulation par ledit premier type de signal de modulation de réception, et

- détecte sélectivement ladite première valeur de deuxième intensité des composantes spectrales d'émission ou ladite deuxième valeur de deuxième intensité des composantes spectrales d'émission lorsque ledit signal modifié de réception correspond à une modulation par ledit deuxième type de signal de modulation.

On décrit maintenant un mode de réalisation de l'invention en référence aux figures annexées dans lesquelles :

- FIG. 1 représente un système de transmission selon l'invention ;
- FIG. 2A et FIG. 2B représentent respectivement la densité spectrale d'énergie des états à photon unique avant modulation, et après modulation au niveau de l'émetteur;
- FIG. 3 représente la densité spectrale d'énergie des signaux transmis de l'émetteur au récepteur selon les états des photons ;
- FIG. 4 représente un montage permettant de démontrer la faisabilité du procédé selon l'invention ;
- FIG. 5 représente le spectre après filtrage d'un signal non atténué équivalent à l'état $| +, 1\rangle$ ou $| -, 1\rangle$ ;
- FIG. 6A et FIG. 6B représentent le spectre observé après le modulateur de phase selon l'invention ;
- FIG. 7 représente les taux d'erreur observés en fonction de la distance de transmission, pour les différents états.

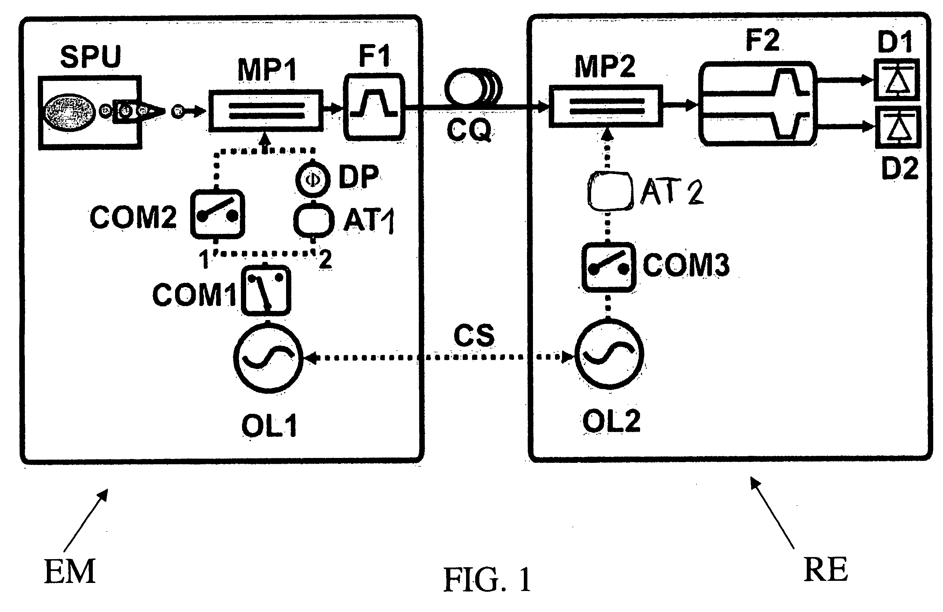

Comme illustré FIG. 1, un système de transmission optique d'un code binaire selon l'invention comprend un émetteur EM et un récepteur RE. L'émetteur EM comprend une source SPU agencé pour générer un signal électromagnétique. La source SPU correspond par exemple à une source de photon unique agencé pour générer des photons uniques. Les photons uniques issus de la source SPU sont transmis à un premier modulateur de phase MP1, lui-même agencé pour transmettre un signal à un filtre F1. L'émetteur EM comprend également un oscillateur OL1 agencé pour générer un signal électrique. Ce signal électrique peut être transmis à un ensemble de traitement de ce signal électrique comprenant un premier atténuateur variable AT1, et un déphaseur DP. Le signal obtenu en sortie de l'ensemble de traitement est transmis au modulateur MP1 pour moduler le signal électromagnétique avant sa transmission au filtre F1.

Le récepteur RE comprend un deuxième modulateur de phase MP2, un filtre réjecteur F2, deux détecteurs D1 et D2, un oscillateur OL2 et un atténuateur variable AT2. L'oscillateur OL2 est agencé pour générer un signal électrique et à transmettre ce signal à l'atténuateur variable AT2. Ce signal peut alors être transmis au modulateur MP2 qui est agencé pour moduler un signal électromagnétique reçu de l'émetteur EM par un canal quantique CQ, en fonction du signal électrique. Ce signal modulé est ensuite transmis au filtre réjecteur F2 qui est lui-même relié aux détecteurs D1 et D2.

L'oscillateur OL1 est par ailleurs synchronisé avec l'oscillateur OL2 par un canal de synchronisation CS. De la sorte, les composantes spectrales optiques à l'émetteur et au récepteur ont une relation de phase fixée.

On décrit maintenant le fonctionnement du système de transmission optique tel que précédemment décrit.

Aux fins de la présente demande, on utilisera les notations habituelles dans le domaine de la cryptographie quantique. En particulier, on utilisera la notation de Dirac $| u \rangle$ pour désigner un état quantique.

Selon l'invention, la source de photon unique SPU génère donc signal électromagnétique correspondant par exemple à un état photon unique de pulsation optique $\omega_0$ noté $| 1\omega_0 \rangle$. L'oscillateur OL1 génère également un signal électrique radio-fréquence qui a en sortie de l'ensemble de traitement constitué par, l'atténuateur AT1 et le déphaseur DP, a une amplitude notée « a », et une phase relative notée « $\phi$ ». Comme décrit dans la publication de Boucher et Debuisschert « Experimental implementation of time-coding quantum key distribution », Phys. Rev. A 72, 062325, 2005, l'état du signal électromagnétique en sortie du modulateur de phase MP1 est un état noté $| a, \phi\rangle$ avec

$$\left|a,\phi\right\rangle = \sum_{p=-\infty}^{+\infty}\left|1_{\omega_0+p\Omega}\right\rangle J_p(a)\exp(ip(\phi-\frac{\pi}{2}))$$

Dans cette expression, $\Omega$ désigne la pulsation du signal électrique radiofréquence injecté dans le modulateur de phase MP1, a et $\phi$ représentent respectivement l'intensité et la phase relative de ce signal, et $J_p$ désigne la fonction de Bessel d'ordre p.

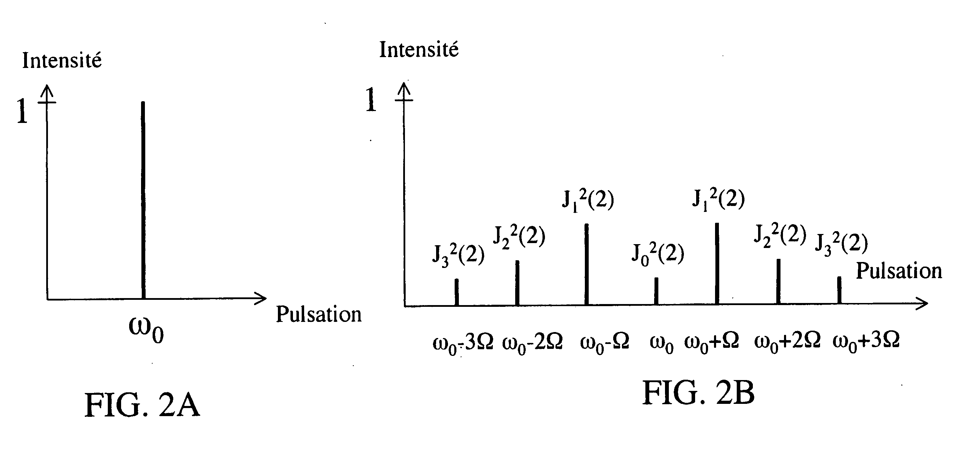

La FIG. 2A représente la densité spectrale d'énergie de l'état à photons unique $| 1\omega_0 \rangle$, c'est-à-dire avant modulation, et la FIG. 2B représente la densité spectrale d'énergie de l'état à photons unique $| a, \phi\rangle$, c'est-à-dire après modulation par le modulateur MP1 pour a=2 et $\phi$=0.

Selon l'invention, afin de pouvoir mettre en oeuvre un protocole à 4 états tel que le protocole BB84, il convient de définir 4 états deux à deux orthogonaux et formant des bases incompatibles. Pour les états générés à l'aide du modulateur MP1, ces propriétés s'expriment de la façon suivante :

$$(1) \quad \left\langle a_i, \phi_i \middle| a_j, \phi_j \right\rangle = \delta_{ij}$$

$$(2) \quad \left| \left\langle a_i, \phi_i \middle| a_j, \phi_j \right\rangle \right|^2 = \frac{1}{2}$$

L'équation (1) ci-dessus représente la condition d'orthogonalité des bases, et la condition (2) ci-dessus représente la condition d'incompatibilité des bases.

Toutefois, ces conditions sont difficiles à obtenir du fait de la dimension infinie de l'espace de Hilbert correspondant à l'infinité de pulsations nécessaires pour décrire un état généré en sortie du modulateur MP1.

Selon l'invention, on utilise donc un filtre F1 passe bande pour diminuer la dimension de cet espace. On se limite donc aux valeurs de pulsations $\omega_0 - \Omega$, $\omega_0$ et $\omega_0 + \Omega$.

Selon l'invention, on définit quatre états normés formant deux bases vérifiant sensiblement les conditions (1) et (2). La première base correspond aux états notés $| +, 1 \rangle$ et $| -, 1 \rangle$ définis par les équations (3) et (4) et la deuxième base correspond aux états notés $| +, 2 \rangle$ et $| -, 2 \rangle$ définis par les équations (6) et (7) :

$$(3) \quad |+,1\rangle = \frac{1}{2}\left[ -\exp(i\frac{\pi}{2})\left|1_{\omega_0-\Omega}\right\rangle + \sqrt{2}\left|1_{\omega_0}\right\rangle + \exp(-i\frac{\pi}{2})\left|1_{\omega_0+\Omega}\right\rangle \right]$$

$$(4)$$

$$|+,1\rangle = \frac{1}{2}\left[ -\exp(-i\frac{\pi}{2})\left|1_{\omega_0-\Omega}\right\rangle + \sqrt{2}\left|1_{\omega_0}\right\rangle + \exp(i\frac{\pi}{2})\left|1_{\omega_0+\Omega}\right\rangle \right]$$

avec

$$(5) \quad J_0(a_0) = \sqrt{2}J_1(a_0) \quad \text{et } a_0 \text{ l'amplitude du signal électrique de modulation}$$

$$(6) \quad |+,2\rangle = \left|1_{\omega_0}\right\rangle$$

$$(7) \quad |-,2\rangle = \frac{1}{\sqrt{2}}\left[ -\exp(i\frac{\pi}{2})\left|1_{\omega_0-\Omega}\right\rangle + \exp(-i\frac{\pi}{2})\left|1_{\omega_0+\Omega}\right\rangle \right]$$

avec

$$(8)\ J_0(a_1) = 0$$

On vérifie aisément que ces quatre étants | +. 1⟩, | -, 1⟩, | +, 2⟩ et | -, 2⟩ forment deux bases incompatibles et sont deux à deux orthogonaux. Les composantes spectrales de pulsation $\omega_0 - \Omega$ et $\omega_0 + \Omega$ caractérisant les états +, 1⟩ et | -, 1⟩ diffèrent par la phase et sont déphasés d'une phase de $\pi$. Les composantes spectrales de pulsation $\omega_0 - \Omega$, et $\omega_0 + \Omega$ caractérisant les états | +, 2⟩ et | -, 2⟩ diffèrent par l'intensité.

Ces états sont générés du coté de l'émetteur EM à l'aide des commutateurs du déphaseur DP et de l'atténuateur AT1.

Lorsque le déphaseur DP ne déphase pas le signal électrique généré par l'oscillateur OL1, le choix de la base correspond à la base 2. L'atténuateur AT1 permet alors de sélectionner la génération de l'état | +, 2⟩ lorsqu'il désactive le signal, ou de l'état | -, 2⟩ lorsqu'il active le signal électrique de modulation et fixe l'amplitude afin de vérifier la relation (8). Lorsque l'atténuateur AT1 réduit l'amplitude du signal de sorte à vérifier la relation (5) ci-dessus.le choix de la base correspond à la base 1.Le déphaseur DP permet quant à lui de sélectionner la génération de l'état | +, 1⟩ou de l'état | -, 1⟩.

Le signal modulé et filtré est alors transmis au récepteur RE via le canal quantique CQ. Conformément à un protocole à quatre états de type BB84, le récepteur RE doit être agencé pour déterminer le signal reçu lorsque la base de mesure est correctement choisie.

Pour ce faire, l'oscillateur OL2 est d'abord synchronisé avec l'oscillateur OL1 par un canal de synchronisation CS de sorte à générer un signal radiofréquence dont l'amplitude vérifie la relation (5) de même fréquence et dont la phase compense le déphasage introduit par la propagation du signal optique via le canal quantique CQ. Le signal radiofréquence coté réception permet de moduler, par l'intermédiaire du modulateur MP2, le signal reçu de l'émetteur EM. L'atténuateur AT2 permet quant à lui de sélectionner la base de mesure 1 ou 2 en désactivant ou en activant le signal de modulation. L'atténuateur AT2 est agencé de sorte que l'absence de modulation, corresponde à une mesure dans la base 2, et la présence de modulation, corresponde à une mesure dans la base 1. Le filtre optique F2 passe bande réduit le nombre des composantes spectrales générée par la modulation du signal optique reçu. Ainsi le signal optique est constitué au plus de trois pulsations $\omega_0 - \Omega$, $\omega_0$ et $\omega_0 + \Omega$.

On décrit maintenant comment le récepteur peut détecter et conserver des bits transmis selon le choix de la base de mesure.

On illustre ce cas en supposant d'abord que la base utilisée pour coder les bits 0 et 1 est la base 1 du coté de l'émetteur.

Dans ce cas, lorsque l'atténuateur AT2 désactive le signal de modulation, la mesure correspond à une mesure dans la base 2. A l'entrée du filtre réjecteur F3, le spectre du signal est alors composé de trois fréquences, puisque le signal est exprimé dans la base 1. Le filtre F3 est un filtre qui sépare les signaux de pulsation $\omega_0$ et les signaux des autres pulsations. Les signaux de pulsation $\omega_0$ sont transmis vers le détecteur D1, et les autres signaux sont transmis vers le détecteur D2.

Or, la relation (5) indique que la probabilité de trouver le photon dans la bande centrale de pulsation $\omega_0$ est égale à la probabilité de trouver le photon dans les deux bandes de pulsation $\omega_0 + \Omega$ et $\omega_0 - \Omega$. Ainsi, quel que soit l'état utilisé, | +, 1⟩ ou | -, 1⟩, les probabilités de détection sur D1 et D2 sont équiprobables. Dans ce cas, il n'est donc pas possible de déterminer la valeur du bit transmis. Cette situation d'incertitude est représentée par un point d'interrogation « ? » dans le tableau 1 ci-dessous résumant le protocole à quatre état selon l'invention.

Lorsque l'atténuateur AT2 fixe l'amplitude de modulation de sorte à vérifier la relation (5) le signal reçu de l'émetteur est modulé par un signal électrique émis par l'oscillateur OL2 et la mesure est effectuée dans la base 1. La modulation produit une interférence entre les différentes pulsations des signaux optiques qui modifie le signal reçu de la manière suivante :

L'état | +, 1⟩ est transformé en un état modulé égal à

$$\left[-2\sqrt{2}\exp(i\frac{\pi}{2})J_1(a_0) + \exp(-i\frac{\pi}{2})J_2(a_0)\right]\left|1_{\omega_0-\Omega}\right\rangle + \left[2\sqrt{2}\exp(-i\frac{\pi}{2})J_1(a_0) + \exp(i\frac{\pi}{2})J_2(a_0)\right]\left|1_{\omega_0+\Omega}\right\rangle$$

On note que cet état n'a plus de composante à la pulsation $\omega_0$. La détection ne peut donc se faire que sur le détecteur D2 après le passage par le filtre réjecteur F2. On peut donc déterminer sans ambiguïté l'état initial et donc la valeur du bit transmis.

De la même façon, l'état | -, 1⟩ est transformé en un état modulé égal à :

$$J_2(a_0)\exp(i\frac{\pi}{2})\left|1_{\omega_0-\Omega}\right\rangle + 4J_1(a_0)\left|1_{\omega_0}\right\rangle + J_2(a_0)\exp(i\frac{\pi}{2})\left|1_{\omega_0+\Omega}\right\rangle$$

Dans cet état modulé, l'amplitude des composantes de pulsations $\omega_0 + \Omega$ et $\omega_0 - \Omega$ est faible. La détection peut donc se produire sur le détecteur D1 avec une probabilité importante, et on peut donc déterminer l'état initial et donc la valeur du bit transmis avec une probabilité importante.

On note que la probabilité d'observer une détection sur D2 n'est pas nulle du fait de la présence des pulsations $\omega_0 + \Omega$ et $\omega_0 - \Omega$. Ainsi le taux d'erreur quantique moyen est environ de 0,3 %, ce qui a pour effet de diminuer la distance maximale de transmission.

Lorsque la base 2 est utilisée pour coder les bits d'informations, on démontre de la même façon que lorsque l'atténuateur AT2 coupe le signal de modulation et que la mesure se fait dans la base 2 à la réception, on peut déterminer l'état initial du photon émis, alors que les deux états d'émission sont équiprobables lorsque AT2 fixe l'amplitude du signal de modulation de telle sorte à vérifier l'équation (5) et que la mesure de réception se fait dans la base 1. Cette situation d'incertitude est représentée par un point d'interrogation « ? » dans le tableau 1 ci-dessous résumant le protocole à quatre états selon l'invention.

Tableau 1

| Bases utilisées à l'émetteur EM | 1 | | | | 2 | | | |
|---|---|---|---|---|---|---|---|---|
| Valeurs des bits transmis | 0 | | 1 | | 0 | | 1 | |
| Etats utilisés | $\left| +, 1\right\rangle$ | | $\left| -, 1\right\rangle$ | | $\left| +, 2\right\rangle$ | | $\left| -, 2\right\rangle$ | |
| Bases utilisées au récepteur | 1 | 2 | 1 | 2 | 1 | 2 | 1 | 2 |
| Bits détectés | 0 | ? | 1 | ? | ? | 0 | ? | 1 |
| Bits conservés | X | | X | | | X | | X |

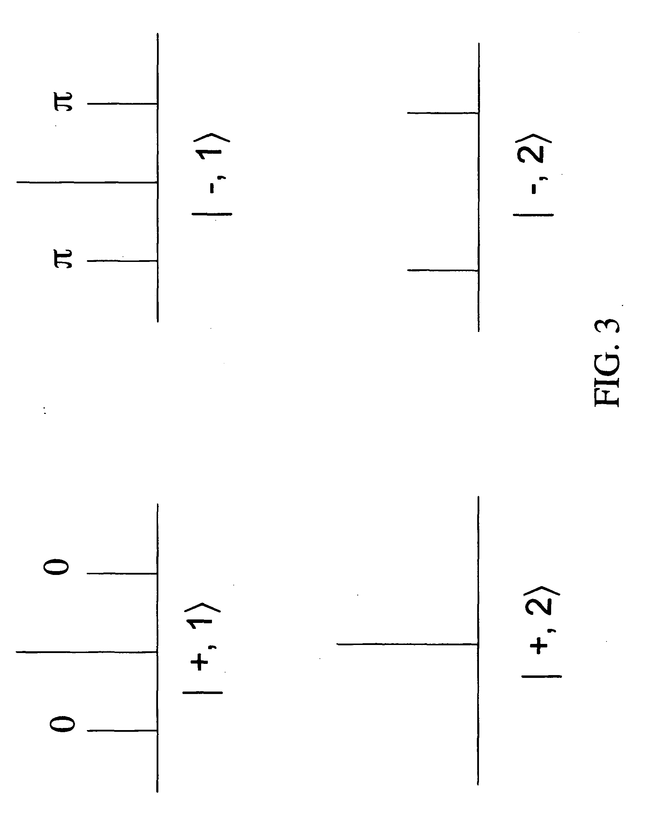

La FIG. 3 illustre également le spectre du signal transmis au récepteur RE par l'émetteur EM en fonction de l'état utilisé. Sur cette figure, on a représenté une fréquence centrale correspondant à la pulsation $\omega_0$, et des fréquences latérales correspondant aux pulsations $\omega_0 + \Omega$ et $\omega_0 - \Omega$. Pour les états $\left| +, 1\right\rangle$ et $\left| -, 1\right\rangle$, les phases relatives des fréquences latérales, respectivement 0 et $\pi$ sont indiquées au-dessus des bandes latérales.

Ainsi, en référence à la FIG. 3 et au tableau 1, les bits transmis peuvent être détectés lorsque les deux bases utilisées pour l'émission et la réception sont identiques, et ne peuvent être détectées lorsque les deux bases sont différentes.

Selon l'invention, l'émetteur, Alice, choisit un état dans l'une des deux bases et envoie un photon au récepteur, Bob. Bob choisit alors, indépendamment d'Alice, une base de mesure. Si la combinaison des bases utilisées par Alice et Bob correspond à un point d'interrogation « ? » dans le tableau 1, le photon sera détecté soit au niveau du détecteur D1 soit au niveau du détecteur D2 avec la même probabilité, et le résultat sera indéterminé.

Cette situation correspond bien à un protocole à quatre état de type BB84 tel que décrit dans la publication « Quantum Cryptography : Public key distribution and coin tossing » précitée.

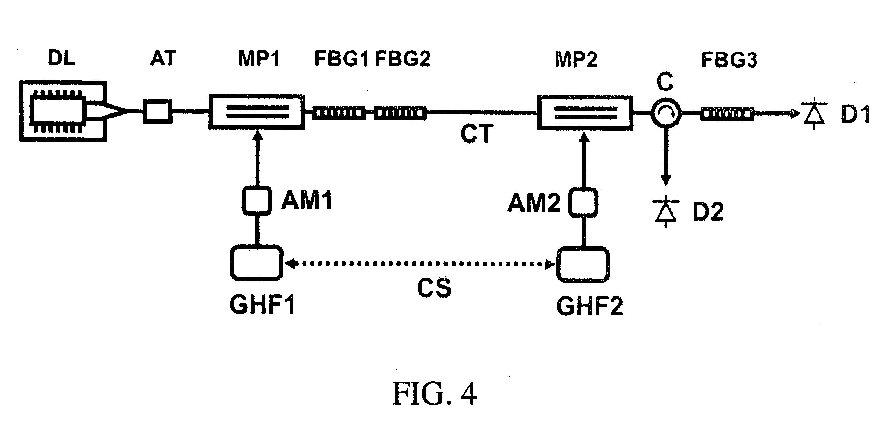

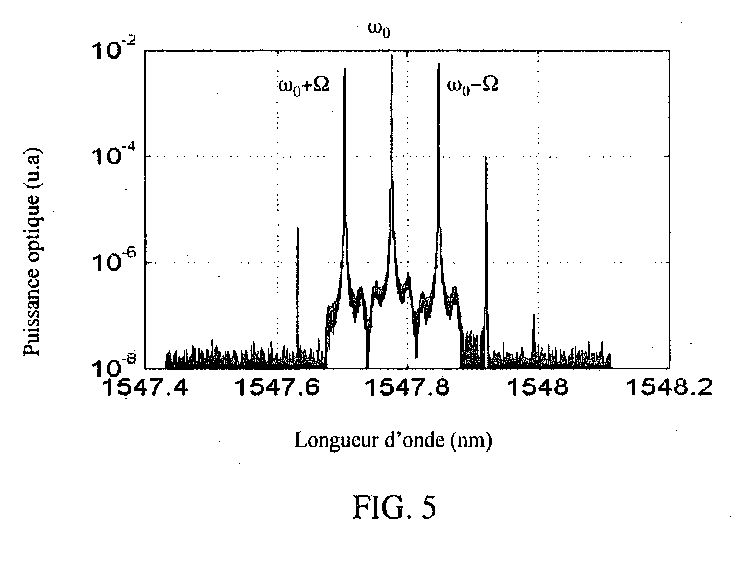

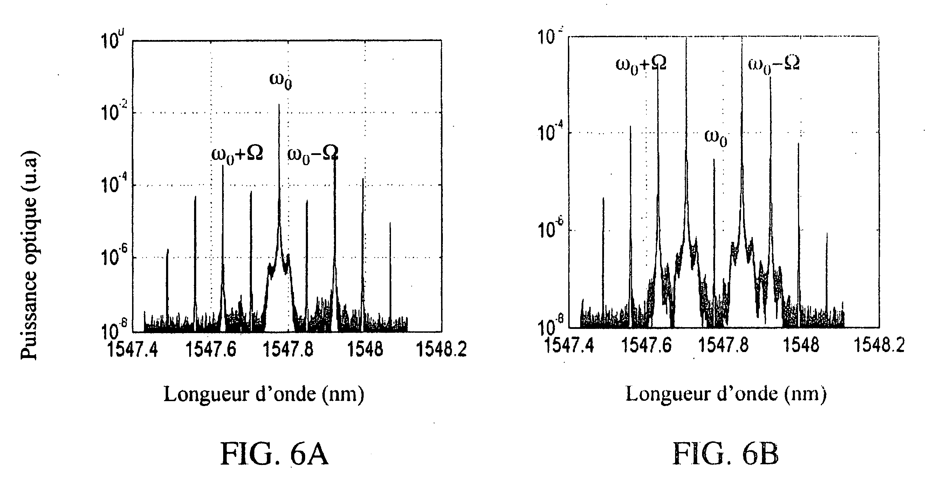

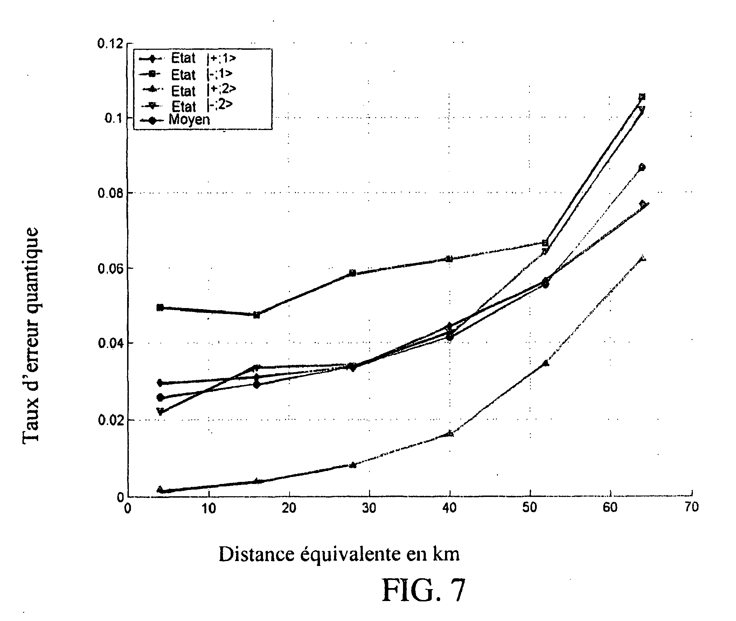

FIG. 4 représente un montage permettant de démontrer la faisabilité du procédé. Le système est constitué d'une diode laser de type DFB de longueur d'onde d'émission proche de 1547.8 nm, de deux modulateurs de phase éléctro-optiques intégré sur Niobate de Lithium MP1 et MP2 de bande passante de 10 GHz, de trois filtres à miroir de Bragg FBG1, FBG2, FBG3, d'un circulateur C et de deux photodiodes à avalanches D1 et D2. Le canal de transmission CT est constitué d'un fibre standard monomode à 1550nm. L'atténuateur AT permet d'atténuer le signal optique afin de simuler une source à photon unique. Les générateurs à haute fréquence GHF1 et GHF2 associés respectivement aux amplificateurs AM1 et AM2 pilotent respectivement les modulateurs MP1 et MP2. La fréquence du signal HF utilisée est de 8 GHz. Un signal de synchronisation transmit via le canal de synchronisation CS permet d'asservir en phase GHF1 et GHF2. Les filtres FBG1 et FBG2 constituent un filtre équivalent à un filtre passe bande de 80 pm. La figure 5 représente le spectre après filtrage d'un signal non atténué équivalent à l'état $\left| +, 1\right\rangle$ ou $\left| -, 1\right\rangle$. Afin de valider le principe d'interférence permettant de séparer ces deux états, le générateur HF GHF1 produit un signal de modulation en phase et en opposition de phase par rapport au signal de modulation généré par GHF2. On génère ainsi des signaux équivalant aux états $\left| +, 1\right\rangle$ ou $\left| -, 1\right\rangle$ FIG. 6A et FIG. 6B représentent le spectre observé après le modulateur de phase MP2, pour une modulation respectivement en phase et en opposition de phase du signal optique. Le taux d'extinction du pic central et des bandes latérales de modulation pour une variation de phase entre 0 et $\pi$ du signal de modulation est de l'ordre de 20 dB. Le filtre FBG3 de bande passante de 40 pm permet alors de séparer ces deux états. Finalement le taux d'erreur quantique est estimé en atténuant le signal à l'aide de l'atténuateur AT et en utilisant deux photodiodes à avalanche D1 et D2 de rendement de 13 % et dont le nombre de coups d'obscurité sont de l'ordre de 4.5 pour une durée de 10 ns. La figure 7 représente les différents taux d'erreur observés pour les différents états utilisés en fonction de la distance de transmission. L'atténuation du canal de transmission est simulée en utilisant l'atténuateur AT. L'atténuation du récepteur est de l'ordre de 3.2 dB. La distance maximale de transmission est de l'ordre de 60 km. Cette distance peut être améliorée en réduisant les pertes du récepteur ainsi qu'en insérant un filtre passe-bande comme décrit précédemment après le modulateur MP2.

**Revendications**

1. Système de transmission optique d'un code binaire comportant un émetteur et un récepteur et une ligne de réception s'étendant entre ledit émetteur et ledit récepteur
ledit émetteur comprenant :

   - des moyens de génération (SPU) agencés pour générer un signal électromagnétique ayant des grandeurs physiques;
   - des moyens de modification d'émission (AT1, DP, MP1) agencés pour modifier au moins une grandeur physique caractérisant ledit signal électromagnétique en fonction dudit code binaire de sorte à générer un signal modifié d'émission ;

   ladite ligne de transmission (CQ) étant agencée pour transmettre ledit signal modifié d'émission vers ledit récepteur ;
   ledit récepteur comprenant

   - des moyens de modification de réception (AT2, MP2, OL2) agencés pour modifier ledit signal modifié d'émission de sorte à générer un signal modifié de réception ;
   - des moyens de détection (F2, D1, D2) agencés pour détecter les valeurs des grandeurs physiques caractérisant ledit signal modifié de réception

   **caractérisé en ce que** lesdits moyens de modification d'émission sont agencés pour modifier au moins une première grandeur physique et une deuxième grandeur physique dudit signal électromagnétique de sorte à générer ledit signal modifié d'émission, ledit signal modifié d'émission étant choisi aléatoirement parmi au moins un premier type de signal modifié d'émission et un deuxième type de signal modifié d'émission,
   dans lequel pour ledit premier type de signal modifié d'émission, ladite première grandeur physique est constante, et ladite deuxième grandeur physique est fonction d'une valeur de bit dudit code binaire, et pour ledit deuxième type de signal modifié d'émission, ladite deuxième grandeur physique est constante, et ladite première grandeur physique est fonction d'une valeur de bit dudit code binaire,
   **et en ce que** lesdits moyens de détection sont agencés pour déterminer une valeur de ladite première grandeur physique et une valeur de ladite deuxième grandeur physique.

2. Système selon la revendication 1 dans lequel ladite première grandeur physique est l'intensité des composantes spectrales dudit signal électromagnétique.

3. Système selon la revendication 1 ou 2 dans lequel ladite deuxième grandeur physique est la phase relative des composantes spectrales dudit signal électromagnétique.

4. Système selon l'ensemble des revendications 2 et 3 dans lequel lesdits moyens de modification d'émission comprennent des moyens de modulation d'émission (AT1, DP, MP1) agencés pour moduler ledit signal électromagnétique en fonction dudit code binaire de sorte à générer ledit signal modifié d'émission, les composantes spectrales dudit premier type de signal modifié d'émission ayant une première intensité d'émission et une première phase relative d'émission, les composantes spectrales dudit deuxième type de signal modifié d'émission ayant une deuxième intensité d'émission et une deuxième phase relative d'émission ;
ladite première intensité des composantes spectrales d'émission ayant une première valeur de première intensité d'émission pour une première valeur de bit dudit code binaire, et une deuxième valeur de première intensité d'émission pour une deuxième valeur de bit dudit code binaire, ladite première valeur de première intensité modifiée étant égale à ladite deuxième valeur de première intensité modifiée,

ladite première phase relative des composantes spectrales d'émission ayant une première valeur de première phase relative d'émission pour une première valeur de bit dudit code binaire, et une deuxième valeur de première phase relative d'émission pour une deuxième valeur de bit dudit code binaire, ladite première valeur de première phase relative d'émission étant différente de ladite deuxième valeur de première phase relative d'émission,

ladite deuxième intensité des composantes spectrales d'émission ayant une première valeur de deuxième intensité d'émission pour une première valeur de bit dudit code binaire, et une deuxième valeur de deuxième intensité d'émission pour une deuxième valeur de bit dudit code binaire, ladite première valeur de deuxième intensité d'émission étant différente de ladite deuxième valeur de deuxième intensité d'émission,

ladite deuxième phase relative des composantes spectrales d'émission ayant une première valeur de deuxième phase relative d'émission pour une première valeur de bit dudit code binaire, et une deuxième valeur de deuxième phase relative d'émission pour une deuxième valeur de bit dudit code binaire, ladite première valeur de deuxième phase relative d'émission étant égale à ladite deuxième valeur de deuxième phase relative d'émission,

et dans lequel lesdits moyens de modification de réception comprennent des moyens de modulation de réception agencés pour générer un signal de modulation de réception et pour moduler ledit signal modifié d'émission par ledit signal de modulation de réception, ledit signal de modulation de réception étant choisi aléatoirement entre un premier type de signal de modulation de réception et un deuxième type de signal de modulation de réception, lesdits moyens de détection étant agencés pour détecter sélectivement ladite première valeur de première phase relative des composantes spectrales du signal d'émission ou ladite deuxième valeur de première phase relative des composantes spectrales du signal d'émission lorsque ledit signal modifié de réception correspond à une modulation par ledit premier type de signal de modulation de réception, et à détecter sélectivement ladite première valeur de deuxième intensité des composantes spectrales du signal d'émission ou ladite deuxième valeur de deuxième intensité des composantes spectrales du signal d'émission lorsque ledit signal modifié de réception correspond à une modulation par ledit deuxième type de signal de modulation.

**5.** Système selon la revendication 4 dans lequel lesdits moyens de modulation d'émission (OL1, AT1, DP, MP1) comprennent :

- un premier générateur (OL1) agencé pour générer un premier signal électrique;
- des moyens de modification de signal d'émission (AT1, DP) agencés pour modifier ledit premier signal électrique de sorte à générer un signal électrique modifié;
- un modulateur d'émission (MP1) agencé pour moduler ledit signal électromagnétique par ledit signal électrique modifié de sorte à générer ledit signal modifié d'émission

et dans lequel lesdits moyens de modulation de réception comprennent :

- un deuxième générateur (OL2) agencé pour générer un deuxième signal électrique ;
- un modulateur de réception agencé pour moduler ledit signal modifié d'émission à l'aide dudit deuxième signal électrique.

**6.** Système selon la revendication 5 dans lequel lesdits moyens de modification de signal d'émission comprennent un premier atténuateur (AT1) agencé pour fixer l'intensité dudit signal électrique modifié à une première valeur d'intensité de signal électrique pour une première valeur de bit dudit code binaire, et à une deuxième valeur d'intensité de signal électrique pour une deuxième valeur de bit dudit code binaire, et un déphaseur (DP) agencé pour fixer la phase dudit signal électrique modifié à une première valeur de phase de signal électrique pour une première valeur de bit dudit code binaire, et à une deuxième valeur de phase de signal électrique pour une deuxième valeur de bit dudit code binaire.

**7.** Emetteur d'un système de transmission d'un code optique comprenant :

- des moyens de génération (SPU) agencés pour générer un signal électromagnétique ayant des grandeurs physiques;
- des moyens de modification d'émission (AT1, DP, MP1) agencés pour modifier au moins une grandeur physique caractérisant ledit signal électromagnétique en fonction dudit code binaire de sorte à générer un signal modifié d'émission ;

**caractérisé en ce que** lesdits moyens de modification d'émission sont agencés pour modifier au moins une première grandeur physique et une deuxième grandeur physique dudit signal électromagnétique de sorte à générer ledit signal modifié d'émission, ledit signal modifié d'émission étant choisi aléatoirement parmi au moins un premier type de signal modifié et un deuxième type de signal modifié,
dans lequel, pour ledit premier type de signal modifié d'émission, ladite première grandeur physique est constante, et ladite deuxième grandeur physique est fonction d'une valeur de bit dudit code binaire, et pour ledit deuxième type de signal modifié d'émission, ladite deuxième grandeur physique est constante, et ladite première grandeur physique est fonction d'une valeur de bit dudit code binaire.

8. Emetteur selon la revendication 7 dans lequel ladite première grandeur physique est l'intensité des composantes spectrales dudit signal électromagnétique.

9. Emetteur selon la revendication 7 ou 8 dans lequel ladite deuxième grandeur physique est la phase relative des composantes spectrales dudit signal électromagnétique.

10. Emetteur selon l'ensemble des revendications 8 et 9 dans lequel lesdits moyens de modification d'émission comprennent des moyens de modulation d'émission (AT1, DP, MP1) agencés pour moduler ledit signal électromagnétique en fonction dudit code binaire de sorte à générer ledit signal modifié d'émission, les composantes spectrales dudit premier type de signal modifié d'émission ayant une première intensité d'émission et une première phase relative d'émission,les composantes spectrales dudit deuxième type de signal modifié d'émission ayant une deuxième intensité d'émission et une deuxième phase relative d'émission
ladite première intensité des composantes spectrales d'émission ayant une première valeur de première intensité d'émission pour une première valeur de bit dudit code binaire, et une deuxième valeur de première intensité d'émission pour une deuxième valeur de bit dudit code binaire, ladite première valeur de première intensité modifiée étant égale à ladite deuxième valeur de première intensité modifiée,
ladite première phase relative des composantes spectrales d'émission ayant une première valeur de première phase relative d'émission pour une première valeur de bit dudit code binaire, et une deuxième valeur de première phase relative d'émission pour une deuxième valeur de bit dudit code binaire, ladite première valeur de première phase relative d'émission étant différente de ladite deuxième valeur de première phase relative des composantes spectrales d'émission,
ladite deuxième intensité des composantes spectrales d'émission ayant une première valeur de deuxième intensité d'émission pour une première valeur de bit dudit code binaire, et une deuxième valeur de deuxième intensité d'émission pour une deuxième valeur de bit dudit code binaire, ladite première valeur de deuxième intensité d'émission étant différente de ladite deuxième valeur de deuxième intensité d'émission,
ladite deuxième phase relative des composantes spectrales d'émission ayant une première valeur de deuxième phase relative d'émission pour une première valeur de bit dudit code binaire, et une deuxième valeur de deuxième phase relative d'émission pour une deuxième valeur de bit dudit code binaire, ladite première valeur de deuxième phase relative d'émission étant égale à ladite deuxième valeur de deuxième phase relative d'émission.

11. Emetteur selon la revendication 10 dans lequel lesdits moyens de modulation d'émission (OL1, AT1, DP, MP1) comprennent :

- un premier générateur (OL1) agencé pour générer un premier signal électrique;
- des moyens de modification de signal d'émission (AT1, DP) agencés pour modifier ledit premier signal électrique de sorte à générer un signal électrique modifié;

un modulateur d'émission (MP1) agencé pour moduler ledit signal électromagnétique par ledit signal électrique modifié de sorte à générer ledit signal modifié d'émission.

12. Emetteur selon la revendication 11 dans lequel lesdits moyens de modification de signal d'émission comprennent un atténuateur pour générer de façon aléatoire, en tant que signal électrique modifié, un premier type de signal électrique modifié ou un deuxième type de signal électrique modifié, pour une première valeur de bit dudit code binaire, et à une deuxième valeur d'intensité de signal électrique pour une deuxième valeur de bit dudit code binaire, et un déphaseur agencé pour fixer la phase dudit premier type de signal électrique modifié à une première valeur de phase de signal électrique pour une première valeur de bit dudit code binaire, et à une deuxième valeur de phase de signal électrique pour une deuxième valeur de bit dudit code binaire.

13. Récepteur d'un système de transmission optique d'un code binaire, ledit récepteur étant agencé pour recevoir ledit signal modifié d'émission transmis par un émetteur selon l'une des revendications 7 à 12, ledit récepteur comprenant :

- des moyens de modification de réception (AT2, MP2, OL2) agencés pour modifier ledit signal modifié d'émission de sorte à générer un signal modifié de réception ;
- des moyens de détection (F2, D1, D2) agencés pour détecter des grandeurs physiques dudit signal modifié de réception

**caractérisé en ce que** lesdits moyens de détection sont agencés pour déterminer une valeur de ladite première grandeur physique et une valeur de ladite deuxième grandeur physique.

14. Récepteur selon la revendication 13 dans lequel lesdits moyens de modification de réception comprennent des moyens de modulation de réception agencés pour générer un signal de modulation de réception et pour moduler ledit signal modifié d'émission par ledit signal de modulation de réception, ledit signal de modulation de réception étant généré aléatoirement parmi un premier type de signal de modulation de réception et un deuxième type de signal de modulation de réception, lesdits moyens de détection étant agencés pour détecter sélectivement ladite première valeur de première phase relative des composantes spectrales d'émission ou ladite deuxième valeur de première phase relative des composantes spectrales d'émission lorsque ledit signal modifié de réception correspond à une modulation par ledit premier type de signal de modulation de réception, et à détecter sélectivement ladite première valeur de deuxième intensité des composantes spectrales d'émission ou ladite deuxième valeur de deuxième intensité d'émission lorsque ledit signal modifié de réception correspond à une modulation par ledit deuxième type de signal de modulation.

15. Procédé de transmission optique d'un code binaire entre un expéditeur et un destinataire dans lequel ledit expéditeur

- génère un signal électromagnétique **caractérisé par** des grandeurs physiques;
- modifie au moins une grandeur physique dudit signal électromagnétique en fonction dudit code binaire de sorte à générer un signal modifié d'émission ;

ledit destinataire

- reçoit ledit signal modifié d'émission ;
- modifie ledit signal modifié d'émission de sorte à générer un signal modifié de réception ;
- détecte des grandeurs physiques dudit signal modifié de réception

ledit procédé **étant caractérisé en ce que** ledit expéditeur modifie au moins une première grandeur physique et une deuxième grandeur physique dudit signal électromagnétique de sorte à générer ledit signal modifié d'émission, ledit signal modifié d'émission étant choisi aléatoirement parmi au moins un premier type de signal modifié d'émission et un deuxième type de signal modifié d'émission,
dans lequel pour ledit premier type de signal modifié d'émission, ladite première grandeur physique est constante, et ladite deuxième grandeur physique est fonction d'une valeur de bit dudit code binaire, et pour ledit deuxième type de signal modifié d'émission, ladite deuxième grandeur physique est constante, et ladite première grandeur physique est fonction d'une valeur de bit dudit code binaire,
**ledit destinataire** détermine une valeur de ladite première grandeur physique et une valeur de ladite deuxième grandeur physique.

16. Procédé selon la revendication 15 dans lequel ladite première grandeur physique est l'intensité des composantes spectrales dudit signal électromagnétique.

17. Procédé selon la revendication 15 ou 16 dans lequel ladite deuxième grandeur physique est la phase relative des composantes spectrale dudit signal électromagnétique.

18. Procédé selon l'ensemble des revendications 16 et 17 dans lequel
ledit expéditeur module ledit signal électromagnétique en fonction dudit code binaire de sorte à générer ledit signal modifié d'émission, les composantes spectrales dudit premier type de signal modifié d'émission ayant une première intensité d'émission et une première phase relative d'émission, les composantes spectrales ledit deuxième type de signal modifié d'émission ayant une deuxième intensité d'émission et une deuxième phase relative d'émission
ladite première intensité des composantes spectrales d'émission ayant une première valeur de première intensité d'émission pour une première valeur de bit dudit code binaire, et une deuxième valeur de première intensité d'émission pour une deuxième valeur de bit dudit code binaire, ladite première valeur de première intensité modifiée étant égale à ladite deuxième valeur de première intensité modifiée,

ladite première phase relative des composantes spectrales d'émission ayant une première valeur de première phase relative d'émission pour une première valeur de bit dudit code binaire, et une deuxième valeur de première phase relative d'émission pour une deuxième valeur de bit dudit code binaire, ladite première valeur de première phase relative d'émission étant différente de ladite deuxième valeur de première phase relative d'émission,

ladite deuxième intensité des composantes spectrales d'émission ayant une première valeur de deuxième intensité d'émission pour une première valeur de bit dudit code binaire, et une deuxième valeur de deuxième intensité d'émission pour une deuxième valeur de bit dudit code binaire, ladite première valeur de deuxième intensité d'émission étant différente de ladite deuxième valeur de deuxième intensité d'émission,

ladite deuxième phase relative des composantes spectrales d'émission ayant une première valeur de deuxième phase relative d'émission pour une première valeur de bit dudit code binaire, et une deuxième valeur de deuxième phase relative d'émission pour une deuxième valeur de bit dudit code binaire, ladite première valeur de deuxième phase relative d'émission étant égale à ladite deuxième valeur de deuxième phase relative d'émission,

ledit destinataire

- génère un signal de modulation de réception, ledit signal de modulation de réception étant généré aléatoirement parmi un premier type de signal de modulation de réception et un deuxième type de signal de modulation de réception,
- module ledit signal modifié d'émission par ledit signal de modulation de réception,
- détecte sélectivement ladite première valeur de première phase relative des composantes spectrales d'émission ou ladite deuxième valeur de première phase relative des composantes spectrales d'émission lorsque ledit signal modifié de réception correspond à une modulation par ledit premier type de signal de modulation de réception, et
- détecte sélectivement ladite première valeur de deuxième intensité des composantes spectrales d'émission ou ladite deuxième valeur de deuxième intensité d'émission lorsque ledit signal modifié de réception correspond à une modulation par ledit deuxième type de signal de modulation.

**Claims**

1. A system for the optical transmission of a binary code including an emitter and a receiver and an receiving line extending between said emitter and said receiver
said emitter including:

   - generating means (SPU) arranged to generate an electromagnetic signal having physical quantities;
   - emission modification means (AT1, DP, MP1) arranged to modify at least one physical quantity characterising said electromagnetic signal as a function of said binary code so as to generate a modified emission signal;

   said transmission line (CQ) being so arranged as to transmit said modified emission signal to said receiver;
   said receiver including

   - reception modification means (AT2, MP2, OL2) arranged to modify said modified emission signal so as to generate a modified reception signal;
   - detection means (F2, D1, D2) arranged to detect the values of the physical quantities characterising said modified reception signal

   **characterised in that** said emission modification means are arranged to modify at least a first physical quantity and a second physical quantity of said electromagnetic signal, so as to generate said modified emission signal, said modified emission signal being randomly selected among at least a first type of modified emission signal and a second type of modified emission signal,
   wherein, for said first type of modified emission signal, said first physical quantity is constant and said second physical quantity is a function of a bit value of said binary code and for said second type of modified emission signal, said second physical quantity is constant and said first physical quantity is a function of a bit value of said binary code; and **in that** said detection means are so arranged as to determine a value of said first physical quantity and the value of said second physical quantity.

2. A system according to claim 1, wherein said first physical quantity is the intensity of spectrum components of said electromagnetic signal.

3. A system according to claim 1 or 2, wherein said second physical quantity is the relative phase of the spectrum component of said electromagnetic signal.

4. A system according to claims 2 and 3 together, wherein said emission modification means include emission modulation means (AT1, DP, MP1) so arranged as to modulate said electromagnetic signal as a function of said binary code, so as to generate said modified emission signal, said spectrum component of said first type of modified emission signal having a first emission intensity and a first emission relative phase, the spectrum components of said second type of modified emission signal having a second emission intensity and a second emission relative phase;

said first intensity of the emission spectrum components having a first value of first emission intensity for a first bit value of said binary code and a second value of first emission intensity for a second bit value of said binary code, said first value of first modified intensity being equal to said second value of first modified intensity;

said first relative phase of the emission spectrum components having a first value of first emission relative phase for a first bit value of said binary code and a second value of first emission relative phase for a second bit value of said binary code, said first value of first emission relative phase being different from said second value of first emission relative phase,

said second intensity of the emission spectrum components having a first value of second emission intensity for a first bit value of said binary code and a second value of second emission intensity for a second bit value of said binary code, said first value of second emission intensity being different from said second value of second emission intensity,

said second relative phase of the emission spectrum components having a first value of second emission relative phase for a first bit value of said binary code and a second value of emission relative phase for a second bit value of said binary code, said first value of second emission relative phase being equal to said second value of second emission relative phase,

wherein said reception modification means include reception modulation means so arranged as to generate a reception modulation signal and to modulate said modified emission signal with said reception modulation signal, said reception modulation signal being randomly selected between a first type of reception modulation signal and a second type of reception modulation signal, said detection means being so arranged as to selectively detect said first value of first relative phase of the spectrum components of the emission signal or said second value of first relative phase of the spectrum components of the emission signal when said modified reception signal corresponds to a modulation by said first type of reception modulation signal, and to selectively detect said first value of second intensity of the spectrum components of the emission signal or said second value of second intensity of the spectrum components of the emission signal when said modified reception signal corresponds to a modulation by said second type of modulation signal.

5. A system according to claim 4, wherein said emission modulation means (OL1, AT1, DP, MP1) include:

   - a first generator (OL1) arranged to generate a first electric signal;
   - emission signal modification means (AT1, DP) arranged to modify said first electric signal so as to generate a modified electric signal;
   - an emission modulator (MP1) arranged to modulate said electromagnetic signal with said modified electric signal so as to generate said modified emission signal and wherein said reception modulation means include:
   - a second generator (OL2) arranged so as to generate a second electric signal;
   - a reception modulator arranged to modulate said modified emission signal using said second electric signal.

6. A system according to claim 5, wherein said first emission signal modification means include a first attenuator (AT1) arranged to set the intensity of said modified electric signal at a first intensity value of the electric signal for a first bit value of said binary code and to a second intensity value of the electric signal for a second bit value of said binary code and a phase shifter (DP) arranged to set the phase of said modified electric signal into a first electric signal phase value for a first bit value of said binary code and to a second electric signal phase value for a second bit value of said binary code.

7. An emitter of system for the transmission of an optical code including:

   - generation means (SPU) arranged to generate an electromagnetic signal having physical quantities;
   - emission modification means (AT1, DP, MP1) arranged to modify at least a physical quantity characterising said electromagnetic signal as a function of said binary code so as to generate a modified emission signal;

**characterised in that** said emission modification means are arranged to modify at least a first physical quantity and a second physical quantity of said electromagnetic signal so as to generate said modified emission signal, modified emission signal being randomly selected among at least a first type of modified signal and a second type of modified signal,

wherein, for said type of modified emission signal, said first physical quantity is constant and said second physical quantity is a function of a bit value of said binary code and for said second type of modified emission signal, said second physical quantity is constant and said first physical quantity is a function of a bit value of said binary code.

8. An emitter according to claim 7, wherein said first physical quantity is the intensity of the spectrum components of said electromagnetic signal.

9. An emitter according to claim 7 or 8, wherein said second physical quantity is the relative phase of the spectrum components of said electromagnetic signal.

10. An emitter according to claims 8 and 9 together, wherein said emission modification means include emission modulation means (AT1, DP, MP1) arranged to modulate said electromagnetic signal as a function of said binary code so as to generate said first modified emission signal, the spectrum components of said first type of modified emission signal having a first emission intensity and a first emission relative phase, the spectrum components of said second type of modified emission signal having a second emission intensity and a second emission relative phase,

said first intensity of the emission spectrum components having a first value of first emission intensity for a first bit value of said binary code and a second value of first emission intensity for a second bit value of said binary code, said first value of first modified intensity being equal to said second value of first modified intensity,

said first relative phase of the emission spectrum components having a first value of first emission relative phase for a first bit value of said binary code and a second value of first emission relative phase for a second bit value of said binary code, said first value of first emission relative phase being different from said second value of first relative phase of the emission spectrum components,

said second intensity of the emission spectrum components having a first value of second emission intensity for a first bit value of said binary code and a second value of second emission intensity for a second bit value of said binary code of said first value of second emission intensity being different from said second value of second emission intensity,

said second relative phase of the emission spectrum components having a first value of second emission relative phase for a first bit value of said binary code and a second value of second emission relative phase for a second bit value of said binary code, said first value of second emission relative phase being equal to said second value of second emission relative phase.

11. An emitter according to claim 10, wherein said emission modulation means (OL1, AT1, DP, MP1) include:

    - a first generator (OL1) arranged to generate a first electric signal;
    - emission signal modification means (AT1, DP) arranged to modify said first electric signal so as to generate a modified electric signal;

an emission modulator (MP1) arranged to modulate said electromagnetic signal with said modified electric signal so as to generate said modified emission signal.

12. An emitter according to claim 11, wherein said emission signal modification means include an attenuator for randomly generating as a modified electric signal, a first type of modified electric signal or a second type of modified electric signal for a first bit value of said binary code and to a second electric signal intensity value for a second bit value of said binary code, and a phase shifter arranged to set the phase of said first type of modified electric signal to a first electric signal phase value for a first bit value of said binary code, and to a second electric signal phase value for a second bit value of said binary code.

13. A receiver of a system for the optical transmission of a binary code, said receiver being so arranged as to receive said modified emission signal transmitted by an emitter according to one of claims 7 to 12, said receiver including:

    - reception modification means (AT2, MP2, OL2) so arranged as to modify said modified emission signal so as to generate a modified reception signal;
    - detection means (F2, D1, D2) so arranged as to detect physical quantities of said modified reception signal

**characterised in that** said detection means are so arranged as to determine a value of said first physical quantity and a value of said second physical quantity.

14. A receiver according to claim 13, wherein said reception modification means include reception modulation means so arranged as to generate a reception modulation signal and to modulate said modified emission signal with said reception modulation signal, said reception modulation signal being randomly generated among a first type of reception modulation signal and a second type of reception modulation signal, said detection means being so arranged as to selectively detect said first value of first relative phase of the emission spectrum components or said second value of first relative phase of the emission spectrum components when said modified reception signal corresponds to a modulation with said first type of reception modulation signal and for selectively detecting said first value of second intensity of the emission spectrum components or said second value of second emission intensity when said modified reception signal corresponds to a modulation with said second type of modulation signal.

15. A method for the optical transmission of a binary code between a sender and a receiver, wherein said sender

   - generates an electromagnetic signal **characterised by** physical values;
   - modifies at least a physical value of said electromagnetic signal as a function of said binary code so as to generate a modified emission signal;

   said receiver

   - receives said modified emission signal;
   - modifies said modified emission signal so as to generate a modified reception signal;
   - detects physical quantities of said modified reception signal

   said method being **characterised in that** said sender modifies at least a first physical quantity and a second physical quantity of said electromagnetic signal so as to generate said modified emission signal, said modified emission signal being randomly selected among at least a first type of modified emission signal and a second type of modified emission signal,
   wherein for said first type of modified emission signal, said first physical value is constant and said second physical value is a function of a bit value of said binary code and for said second type of modified emission signal, said second physical quantity is constant and said first physical quantity is a function of a bit value of said binary code, said receiver determines a value of said first physical quantity and a value of said second physical quantity.

16. A method according to claim 15 wherein said first physical quantity is the intensity of the spectrum components of said electromagnetic signal.

17. A method according to claim 15 or 16, wherein said second physical quantity is the relative phase of the spectrum components of said electromagnetic signal.

18. A method according to claims 16 and 17 together, wherein
   said sender modulates said electromagnetic signal as a function of said binary code so as to generate said modified emission signal, the spectrum components of said first type of emission modified signal having a first emission intensity and a first emission relative phase, the spectrum components of said second type of modified emission signal having a second emission intensity and a second emission relative phase,
   said first intensity of the emission spectrum components having a first value of first emission intensity for a first bit value of said binary code and a second value of first emission intensity for a second bit value of said binary code, said first value of first modified intensity being equal to said second value of first modified intensity,
   said first relative phase of emission spectrum component having a first value of first emission relative phase for a first bit value of said binary code, and a second value of first emission relative phase for a second bit value of said binary code, said first value of first emission relative phase being different from said second value of first emission relative phase,
   said second intensity of the emission spectrum components having a first value of second emission intensity for a first bit value of said binary code and a second value of second emission intensity for a second bit value of said binary code, said first value of second emission intensity being different from said second value of second emission intensity,
   said second relative phase of the emission spectrum components having a first value of second emission relative phase for a first bit value of said binary code and a second value of second emission relative phase for a second bit value of said binary code, said first value of second emission relative phase being equal to said second value of second emission relative phase,

said receiver

- generates a reception modulation signal, said reception modulation signal being randomly generated among a first type of reception modulation signal and a second type of reception modulation signal,
- modulates said modified emission signal with said reception modulation signal,
- selectively detects said first value of said first relative phase of the emission spectrum components or said second value of the first relative phase of the emission spectrum component when said modified reception signal corresponds to a a modulation with said second type of modulation signal and
- selectively detects said first value of second intensity of the emission spectrum components or said second value of second emission intensity when said modified reception signal corresponds to a modulation with said second type of modulation signal.

**Patentansprüche**

1. Optisches Übertragungssystem eines Binärcodes mit einem Sender und einem Empfänger sowie einer Empfangsleitung, die sich zwischen dem genannten Sender und dem genannten Empfänger erstreckt,
wobei der genannte Sender folgende Mittel umfasst:

- Erzeugungsmittel (SPU), die vorgesehen sind, um ein elektromagnetisches Signal mit physikalischen Größen zu erzeugen;
- Sendeänderungsmittel (AT1, DP, MP1), die vorgesehen sind, um mindestens eine, das genannte elektromagnetische Signal kennzeichnende Größe entsprechend dem genannten Binärcode zu ändern, um ein geändertes Sendesignal zu erzeugen;

wobei die genannte Übertragungsleitung (CQ) vorgesehen ist, um das genannte geänderte Sendesignal an den genannten Empfänger zu übertragen;
wobei der genannte Empfänger folgende Mittel umfasst:

- Empfangsänderungsmittel (AT2, MP2, OL2), die vorgesehen sind, um das genannte geänderte Sendesignal zu ändern, um ein geändertes Empfangssignal zu erzeugen;
- Erfassungsmittel (F2, D1, D2), die vorgesehen sind, um die Werte der das genannte geänderte Empfangssignal kennzeichnenden physikalischen Größen zu erfassen,

**dadurch gekennzeichnet, dass** die genannten Sendeänderungsmittel vorgesehen sind, um mindestens eine erste physikalische Größe und eine zweite physikalische Größe des genannten elektromagnetischen Signals zu ändern, um das genannte geänderte Sendesignal zu erzeugen, wobei das genannte geänderte Sendesignal zufällig ausgewählt wird unter mindestens einem ersten geänderten Sendesignaltyp und einem zweiten geänderten Sendesignaltyp, wobei die genannte erste physikalische Größe für den genannten ersten geänderten Sendesignaltyp konstant ist, und die genannte zweite physikalische Größe abhängig ist von einem Bitwert des genannten Binärcodes, und die genannte zweite physikalische Größe für den genannten zweiten geänderten Sendesignaltyp konstant ist, und die genannte erste physikalische Größe abhängig ist von einem Bitwert des genannten Binärcodes,
und dass die genannten Erfassungsmittel vorgesehen sind, um einen Wert der genannten ersten physikalischen Größe und einen Wert der genannten zweiten physikalischen Größe zu bestimmen.

2. System gemäß Anspruch 1, bei dem die genannte erste physikalische Größe die Intensität der spektralen Komponenten des genannten elektromagnetischen Signals ist.

3. System gemäß Anspruch 1 oder 2, bei dem die genannte zweite physikalische Größe die relative Phase der spektralen Komponenten des genannten elektromagnetischen Signals ist.

4. System gemäß beiden Ansprüche 2 und 3, bei dem die genannten Sendeänderungsmittel Sendemodulationsmittel (AT1, DP, MP1) umfassen, die vorgesehen sind, um das genannte elektromagnetische Signal entsprechend dem genannten Binärcode zu modulieren, um das genannte geänderte Sendesignal zu erzeugen, wobei die spektralen Komponenten des genannten ersten geänderten Sendesignaltyps eine erste Sendeintensität und eine erste relative Sendephase haben, wobei die spektralen Komponenten des genannten zweiten geänderten Sendesignaltyps eine zweite Sendeintensität und eine zweite relative Sendephase haben;

wobei die genannte erste Intensität der spektralen Sendekomponenten einen ersten Wert der ersten Sendeintensität für einen ersten Bitwert des genannten Binärcodes und einen zweiten Wert der ersten Sendeintensität für einen zweiten Bitwert des genannten Binärcodes hat, wobei der genannte erste Wert der ersten geänderten Intensität gleich dem genannten zweiten Wert der ersten geänderten Intensität ist;

wobei die genannte erste relative Phase der spektralen Sendekomponenten einen ersten Wert der ersten relativen Sendephase für einen ersten Bitwert des genannten Binärcodes und einen zweiten Wert der ersten relativen Sendephase für einen zweiten Bitwert des genannten Binärcodes hat, wobei der erste Wert der ersten relativen Sendephase anders ist als der genannte zweite Wert der ersten relativen Sendephase;

wobei die genannte zweite Intensität der spektralen Sendekomponenten einen ersten Wert der zweiten Sendeintensität für einen ersten Bitwert des genannten Binärcodes und einen zweiten Wert der zweiten Sendeintensität für einen zweiten Bitwert des genannten Binärcodes hat, wobei der genannte erste Wert der zweiten Sendeintensität anders ist als der genannte zweite Wert der zweiten Sendeintensität;

wobei die genannte zweite relative Phase der spektralen Sendekomponenten einen ersten Wert der zweiten relativen Sendephase für einen ersten Bitwert des genannten Binärcodes und einen zweiten Wert der zweiten relativen Sendephase für einen zweiten Bitwert des genannten Binärcodes hat, wobei der erste Wert der zweiten relativen Sendephase gleich dem genannten zweiten Wert der zweiten relativen Sendephase ist; und bei dem die genannten Empfangsänderungsmittel Empfangsmodulationsmittel umfassen, die vorgesehen sind, um ein Empfangsmodulationssignal zu erzeugen und um das genannte geänderte Sendesignal durch das genannte Empfangsmodulationssignal zu modulieren, wobei das genannte Empfangsmodulationssignal zufällig ausgewählt wird unter einem ersten Empfangsmodulationssignaltyp und einem zweiten Empfangsmodulationssignaltyp, wobei die genannten Erfassungsmittel vorgesehen sind, um den genannten ersten Wert der ersten relativen Phase der spektralen Komponenten des Sendesignals oder den genannten zweiten Wert der ersten relativen Phase der spektralen Komponenten des Sendesignals selektiv zu erfassen, wenn das genannte geänderte Empfangssignal einer Modulation durch den genannten ersten Empfangsmodulationssignaltyp entspricht, und um den genannten ersten Wert der zweiten Intensität der spektralen Komponenten des Sendesignals oder den genannten zweiten Wert der zweiten Intensität der spektralen Komponenten des Sendesignals selektiv zu erfassen, wenn das genannte geänderte Empfangssignal einer Modulation durch den genannten zweiten Modulationssignaltyp entspricht.

5. System gemäß Anspruch 4, bei dem die genannten Sendemodulationsmittel (OL1, AT1, DP, MP1) folgendes umfassen:

- einen ersten Generator (OL1), der vorgesehen ist, um ein erstes elektrisches Signal zu erzeugen;
- Änderungsmittel des Sendesignals (AT1, DP), die vorgesehen sind, um das genannte erste elektrische Signal zu ändern, um ein geändertes elektrisches Signal zu erzeugen;
- einen Sendemodulator (MP1), der vorgesehen ist, um das genannte elektromagnetische Signal durch das genannte geänderte elektrische Signal zu modulieren, um das genannte geänderte Sendesignal zu erzeugen;

und bei dem die genannten Empfangsmodulationsmittel folgendes umfassen:

- einen zweiten Generator (OL2), der vorgesehen ist, um ein zweites elektrisches Signal zu erzeugen;
- einen Empfangsmodulator, der vorgesehen ist, um das genannte geänderte Sendesignal mit Hilfe des genannten zweiten elektrischen Signals zu modulieren.

6. System gemäß Anspruch 5, bei dem die genannten Sendesignaländerungsmittel einen ersten Dämpfer (AT1) umfassen, der vorgesehen ist, um die Intensität des genannten geänderten elektrischen Signals auf einen ersten Intensitätswert des elektrischen Signals zu fixieren, für einen ersten Bitwert des genannten Binärcodes, und auf einen zweiten Intensitätswert des elektrischen Signals, für einen zweiten Bitwert des genannten Binärcodes, und einen Phasenschieber (DP), der vorgesehen ist, um die Phase des genannten geänderten elektrischen Signals auf einen ersten Phasenwert des elektrischen Signals zu fixieren, für einen ersten Bitwert des genannten Binärcodes, und auf einen zweiten Phasenwert des elektrischen Signals, für einen zweiten Bitwert des genannten Binärcodes.

7. Sender eines Übertragungssystems eines optischen Codes mit:

- Erzeugungsmitteln (SPU), die vorgesehen sind, um ein elektromagnetisches Signal mit physikalischen Größen zu erzeugen;
- Sendeänderungsmitteln (AT1, DP, MP1), die vorgesehen sind, um mindestens eine, das genannte elektromagnetische Signal kennzeichnende Größe entsprechend dem genannten Binärcode zu ändern, um ein geändertes Sendesignal zu erzeugen,

**dadurch gekennzeichnet, dass** die genannten Sendeänderungsmittel vorgesehen sind, um mindestens eine erste physikalische Größe und eine zweite physikalische Größe des genannten elektromagnetischen Signals zu ändern, um das genannte geänderte Sendesignal zu erzeugen, wobei das genannte geänderte Sendesignal zufällig ausgewählt wird unter mindestens einem ersten geänderten Signaltyp und einem zweiten geänderten Signaltyp, wobei die genannte erste physikalische Größe für den genannten ersten geänderten Sendesignaltyp konstant ist, und die genannte zweite physikalische Größe abhängig ist von einem Bitwert des genannten Binärcodes, und die genannte zweite physikalische Größe für den genannten zweiten geänderten Sendesignaltyp konstant ist, und die genannte erste physikalische Größe abhängig ist von einem Bitwert des genannten Binärcodes.

8. Sender gemäß Anspruch 7, bei dem die genannte erste physikalische Größe die Intensität der spektralen Komponenten des genannten elektromagnetischen Signals ist.

9. Sender gemäß Anspruch 7 oder 8, bei dem die genannte zweite physikalische Größe die relative Phase der spektralen Komponenten des genannten elektromagnetischen Signals ist.

10. Sender gemäß beiden Ansprüchen 8 und 9, bei dem die genannten Sendeänderungsmittel Sendemodulationsmittel (AT1, DP, MP1) umfassen, die vorgesehen sind, um das genannte elektromagnetische Signal entsprechend dem genannten Binärcode zu modulieren, um das genannte geänderte Sendesignal zu erzeugen, wobei die spektralen Komponenten des genannten ersten geänderten Sendesignaltyps eine erste Sendeintensität und eine erste relative Sendephase haben, wobei die spektralen Komponenten des genannten zweiten geänderten Sendesignaltyps eine zweite Sendeintensität und eine zweite relative Sendephase haben;
wobei die genannte erste Intensität der spektralen Sendekomponenten einen ersten Wert der ersten Sendeintensität für einen ersten Bitwert des genannten Binärcodes und einen zweiten Wert der ersten Sendeintensität für einen zweiten Bitwert des genannten Binärcodes hat, wobei der genannte erste Wert der ersten geänderten Intensität gleich dem genannten zweiten Wert der ersten geänderten Intensität ist;
wobei die genannte erste relative Phase der spektralen Sendekomponenten einen ersten Wert der ersten relativen Sendephase für einen ersten Bitwert des genannten Binärcodes und einen zweiten Wert der ersten relativen Sendephase für einen zweiten Bitwert des genannten Binärcodes hat, wobei der erste Wert der ersten relativen Sendephase anders ist als der genannte zweite Wert der ersten relativen Phase der spektralen Sendekomponenten;
wobei die genannte zweite Intensität der spektralen Sendekomponenten einen ersten Wert der zweiten Sendeintensität für einen ersten Bitwert des genannten Binärcodes und einen zweiten Wert der zweiten Sendeintensität für einen zweiten Bitwert des genannten Binärcodes hat, wobei der genannte erste Wert der zweiten Sendeintensität anders ist als der genannte zweite Wert der zweiten Sendeintensität;
wobei die genannte zweite relative Phase der spektralen Sendekomponenten einen ersten Wert der zweiten relativen Sendephase für einen ersten Bitwert des genannten Binärcodes und einen zweiten Wert der zweiten relativen Sendephase für einen zweiten Bitwert des genannten Binärcodes hat, wobei der erste Wert der zweiten relativen Sendephase gleich dem genannten zweiten Wert der zweiten relativen Sendephase ist.

11. Sender gemäß Anspruch 10, bei dem die genannten Sendemodulationsmittel (OL1, AT1, DP, MP1) folgendes umfassen:

 - einen ersten Generator (OL1), der vorgesehen ist, um ein erstes elektrisches Signal zu erzeugen;
 - Änderungsmittel des Sendesignals (AT1, DP), die vorgesehen sind, um das genannte erste elektrische Signal zu ändern, um ein geändertes elektrisches Signal zu erzeugen;

 einen Sendemodulator (MP1), der vorgesehen ist, um das genannte elektromagnetische Signal durch das genannte geänderte elektrische Signal zu modulieren, um das genannte geänderte Sendesignal zu erzeugen.

12. Sender gemäß Anspruch 11, bei dem die genannten Sendesignaländerungsmittel einen Dämpfer umfassen, um zufällig als geändertes elektrisches Signal einen ersten Typ des geändertes elektrischen Signals oder einen zweiten Typ des geänderten elektrischen Signals für einen ersten Bitwert des genannten Binärcodes zu erzeugen, und einen zweiten Intensitätswert des elektrischen Signals für einen zweiten Bitwert des genannten binären Codes, und einen Phasenschieber, der vorgesehen ist, um die Phase des genannten ersten Typs des geänderten elektrischen Signals auf einen ersten Phasenwert des elektrischen Signals zu fixieren, für einen ersten Bitwert des genannten Binärcodes, und auf einen zweiten Phasenwert des elektrischen Signals, für einen zweiten Bitwert des genannten Binärcodes.

13. Empfänger eines optischen Übertragungssystems eines Binärcodes, wobei der genannte Empfänger vorgesehen ist, um das genannte geänderte Sendesignal zu empfangen, das von einem Sender gemäß einem der Ansprüche 7 bis 12 übertragen wird, wobei der genannte Empfänger folgendes umfasst:

- Empfangsänderungsmittel (AT2, MP2, OL2), die vorgesehen sind, um das genannte geänderte Sendesignal zu ändern, um ein geändertes Empfangssignal zu erzeugen;
- Erfassungsmittel (F2, D1, D2), die vorgesehen sind, um die Werte der das genannte geänderte Empfangssignal kennzeichnenden physikalischen Größen zu erfassen,

**dadurch gekennzeichnet, dass** die genannten Erfassungsmittel vorgesehen sind, um einen Wert der genannten ersten physikalischen Größe und einen Wert der genannten zweiten physikalischen Größe zu bestimmen.

14. Empfänger gemäß Anspruch 13, bei dem die genannten Empfangsänderungsmittel Empfangsmodulationsmittel umfassen, die vorgesehen sind, um ein Empfangsmodulationssignal zu erzeugen und um das genannte geänderte Sendesignal durch das genannte Empfangsmodulationssignal zu modulieren, wobei das genannte Empfangsmodulationssignal zufällig erzeugt wird unter einem ersten Empfangsmodulationssignaltyp und einem zweiten Empfangsmodulationssignaltyp, wobei die genannten Erfassungsmittel vorgesehen sind, um den genannten ersten Wert der ersten relativen Phase der spektralen Sendekomponenten oder den genannten zweiten Wert der ersten relativen Phase der spektralen Sendekomponenten selektiv zu erfassen, wenn das genannte geänderte Empfangssignal einer Modulation durch den genannten ersten Empfangsmodulationssignaltyp entspricht, und um den genannten ersten Wert der zweiten Intensität der spektralen Sendekomponenten oder den genannten zweiten Wert der zweiten Intensität der spektralen Sendekomponenten selektiv zu erfassen, wenn das genannte geänderte Empfangssignal einer Modulation durch den genannten zweiten Modulationssignaltyp entspricht.

15. Optisches Übertragungsverfahren eines Binärcodes zwischen einem Absender und einem Empfänger, bei dem der genannte Absender

- ein durch physikalische Größen gekennzeichnetes elektromagnetisches Signal erzeugt;
- mindestens eine physikalische Größe des genannten elektromagnetischen Signals entsprechend dem genannten Binärcode ändert, um ein geändertes Sendesignal zu erzeugen;

der genannte Empfänger

- das genannte geänderte Sendesignal empfängt;
- das genannte geänderte Sendesignal ändert, um ein geändertes Empfangssignal zu erzeugen;
- physikalische Größen des genannten geänderten Empfangssignals erfasst,

wobei das genannte Verfahren **dadurch gekennzeichnet ist, dass** der genannte Absender mindestens eine erste physikalische Größe und eine zweite physikalische Größe des genannten elektromagnetischen Signals ändert, um das genannte geänderte Sendesignal zu erzeugen, wobei das genannte geänderte Sendesignal zufällig ausgewählt wird unter mindestens einem ersten geänderten Sendesignaltyp und einem zweiten geänderten Sendesignaltyp, bei dem die genannte erste physikalische Größe für den genannten ersten geänderten Signaltyp konstant ist, und die genannte zweite physikalische Größe abhängig ist von einem Bitwert des genannten Binärcodes, und die genannte zweite physikalische Größe für den genannten zweiten geänderten Sendesignaltyp konstant ist, und die genannte erste physikalische Größe abhängig ist von einen Bitwert des genannten Binärcodes, wobei der genannte Empfänger einen Wert der genannten ersten physikalischen Größe und einen Wert der genannten zweiten physikalischen Größe bestimmt.

16. Verfahren gemäß Anspruch 15, bei dem die genannte erste physikalische Größe die Intensität der spektralen Komponenten des genannten elektromagnetischen Signals ist.

17. Verfahren gemäß Anspruch 15 oder 16, bei dem die genannte zweite physikalische Größe die relative Phase der spektralen Komponenten des genannten elektromagnetischen Signals ist.

18. Verfahren gemäß beiden Ansprüche 16 und 17, bei dem der genannte Absender das genannte elektromagnetische Signal entsprechend dem genannten Binärcode moduliert, um das genannte geänderte Sendesignal zu erzeugen, wobei die spektralen Komponenten des genannten ersten geänderten Sendesignaltyps eine erste Sendeintensität und eine erste relative Sendephase haben, wobei die spektralen Komponenten des genannten zweiten geänderten Sendesignaltyps eine zweite Sendeintensität und eine zweite relative Sendephase haben;

wobei die genannte erste Intensität der spektralen Sendekomponenten einen ersten Wert der ersten Sendeintensität für einen ersten Bitwert des genannten Binärcodes und einen zweiten Wert der ersten Sendeintensität für einen zweiten Bitwert des genannten Binärcodes hat, wobei der genannte erste Wert der ersten geänderten Intensität gleich dem genannten zweiten Wert der ersten geänderten Intensität ist;

wobei die genannte erste relative Phase der spektralen Sendekomponenten einen ersten Wert der ersten relativen Sendephase für einen ersten Bitwert des genannten Binärcodes und einen zweiten Wert der ersten relativen Sendephase für einen zweiten Bitwert des genannten Binärcodes hat, wobei der erste Wert der ersten relativen Sendephase anders ist als der genannte zweite Wert der ersten relativen Sendephase;

wobei die genannte zweite Intensität der spektralen Sendekomponenten einen ersten Wert der zweiten Sendeintensität für einen ersten Bitwert des genannten Binärcodes und einen zweiten Wert der zweiten Sendeintensität für einen zweiten Bitwert des genannten Binärcodes hat, wobei der genannte erste Wert der zweiten Sendeintensität anders ist als der genannte zweite Wert der zweiten Sendeintensität;

wobei die genannte zweite relative Phase der spektralen Sendekomponenten einen ersten Wert der zweiten relativen Sendephase für einen ersten Bitwert des genannten Binärcodes und einen zweiten Wert der zweiten relativen Sendephase für einen zweiten Bitwert des genannten Binärcodes hat, wobei der erste Wert der zweiten relativen Sendephase gleich dem genannten zweiten Wert der zweiten relativen Sendephase ist;

wobei der genannte Empfänger

- ein Empfangsmodulationssignal erzeugt, wobei das genannte Empfangsmodulationssignal zufällig erzeugt wird unter einem ersten Empfangsmodulationssignaltyp und einem zweiten Empfangsmodulationssignaltyp,
- das genannte geänderte Sendesignal durch das genannte Empfangsmodulationssignal moduliert,
- den genannten ersten Wert der ersten relativen Phase der spektralen Sendekomponenten oder den genannten zweiten Wert der ersten relativen Phase der spektralen Sendekomponenten selektiv erfasst, wenn das genannte geänderte Empfangssignal einer Modulation durch den genannten ersten Empfangsmodulationssignaltyp entspricht, und
- den genannten ersten Wert der zweiten Intensität der spektralen Sendekomponenten oder den genannten zweiten Wert der zweiten Sendeintensität selektiv erfasst, wenn das genannte geänderte Empfangssignal einer Modulation durch den genannten zweiten Modulationssignaltyp entspricht.

FIG. 1

EP 2 067 298 B1

Intensité

$J_3^2(2)$ $J_2^2(2)$

$J_1^2(2)$

$J_1^2(2)$

$J_0^2(2)$

$J_2^2(2)$ $J_3^2(2)$

$\omega_0-3\Omega$ $\omega_0-2\Omega$ $\omega_0-\Omega$ $\omega_0$ $\omega_0+\Omega$ $\omega_0+2\Omega$ $\omega_0+3\Omega$

Pulsation

FIG. 2B

Intensité

$\omega_0$

Pulsation

FIG. 2A

FIG. 3

EP 2 067 298 B1

FIG. 4

EP 2 067 298 B1

FIG. 5

FIG. 6A

FIG. 6B

EP 2 067 298 B1

Distance équivalente en km

FIG. 7

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5307410 A
- FR 2763193
- WO 0249267 A

**Littérature non-brevet citée dans la description**

- **C.H. Bennett ; G. Brassard.** Quantum Cryptography : Public key distribution and coin tossing. *Proceeding of IEEE International on Computers, Systems and Signal Processing,* 1984, 175-179
- **C.H Bennett.** Quantum cryptography using any two non orthogonal states. *Physical Review Letters,* 1992, vol. 68 (21), 3121-3124
- **J. Breguet ; A. Muller ; N. Gisin.** Quantum Cryptography with polarized photons in optical fibres. *Journal of Modern Optics,* 1994, vol. 41 (12), 2405-2412
- **C. Marand ; P. D. Townsend.** Quantum key distribution over distances as long as 30 km. *Opt. Lett.,* 1995, vol. 20 (16), 1695-1697
- **Boucher ; Debuisschert.** Experimental implementation of time-coding quantum key distribution. *Phys. Rev. A,* 2005, vol. 72, 062325